(19) 

Europäisches
Patentamt
European
Patent Office
Office européen
des brevets

(11) **EP 4 458 151 A1**

(12) **EUROPEAN PATENT APPLICATION**

(43) Date of publication:
**06.11.2024 Bulletin 2024/45**

(21) Application number: **23201175.9**

(22) Date of filing: **02.10.2023**

(51) International Patent Classification (IPC):
**A01N 1/00** *(2006.01)* **A01N 25/10** *(2006.01)*
**C08K 3/105** *(2018.01)*

(52) Cooperative Patent Classification (CPC):
(C-Sets available)
**A01N 1/00; A01N 25/10;** C08L 2201/06 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **SABIC Global Technologies B.V.**
**4612 PX Bergen op Zoom (NL)**

(72) Inventors:
• **Vachon, Jerome**
  **562125 Bengaluru (IN)**
• **Alfurhood, Jawaher Abdulaziz**
  **562125 Bengaluru (IN)**
• **Al-Subaie, Mohammed Abdullah**
  **562125 Bengaluru (IN)**
• **Favero, Alessia**
  **562125 Bengaluru (IN)**

(74) Representative: **Sabic INDIA Intellectual Property Group**
**P.O. Box 3008**
**6160 GA Geleen (NL)**

(54) **METAL-BASED ANTI-MICROBIAL ADDITIVES AND PROMOTERS FOR POLYMER COMPOSITIONS**

(57)     Polymeric compositions and articles or products thereof that include a polyolefin resin and an antimicrobial additive dispersed in the polyolefin resin are described. The antimicrobial additive includes a zinc compound or a copper compound, or a combination thereof. The composition can further include an antimicrobial promoter, which can be an aliphatic acid or an aliphatic polyamine, or a combination thereof. Also disclosed is a method of reducing microbial growth on a surface of a medical, industrial, or consumer product comprising an antimicrobial composition by exposing the surface of the product to a microbe.

*FIG. 1*

EP 4 458 151 A1

**(Cont. next page)**

(52) Cooperative Patent Classification (CPC): (Cont.)

C-Sets
**A01N 25/10, A01N 59/16, A01N 59/20;
C08K 5/05, C08L 1/12;
C08L 1/12, C08L 97/02, C08K 5/05**

**Description**

**CROSS REFERENCE TO RELATED APPLICATIONS**

None.

**BACKGROUND**

**A. Field**

The disclosure generally concerns an antimicrobial composition that includes a polyolefin resin, an anti-microbial additive, and optionally, an antimicrobial promoter, dispersed in the polyolefin resin. The anti-microbial additive can include a zinc compound or a copper compound, or a combination thereof. The antimicrobial promoter can include an aliphatic acid or an aliphatic polyamine, or a combination thereof. The composition can have antimicrobial activity.

**B. Description of Related Art**

Anti-microbial additives can include bioactive materials that can hinder the life or growth of microorganisms. Examples of microorganisms include bacteria and/or viruses. Anti-microbial additives can eradicate or prevent the growth of these microorganisms.

The demand for materials possessing antimicrobial properties has significantly increased in recent years, as illustrated by the antimicrobial plastics market size, valued at 23.5 billion in 2019 and expected to grow at a compound annual growth rate of 8.2% from 2020 to 2027. This demand has been driven, at least in part, by the hygiene and safety of plastics, with respect to microbial presence or growth on the surface thereof, desired by consumers.

Warmth, humidity, and the presence of nutrients are useful for microbial growth. Plastics typically lack defenses to prevent the survival and proliferation of microbes in these types of environments. In the case of bacteria, when the number of microbes increases, it can lead to formation of a polysaccharide matrix with embedded cells, known as a biofilm. Biofilms allow microbes to survive under harsh conditions and are much less susceptible to many biocides. Toxins excreted from biofilms can spread pathogenic and resilient infections and can lead to multi-resistant microbial strains. With respect to viruses, the persistence of SARS-CoV-2 was recently measured on different surfaces and, in the case of plastics, measurable amounts of viruses were shown to be present up to 3 days after application to the plastic surface. Accordingly, microbial growth on surfaces, including plastic surfaces, is a potential health concern for, e.g., medical and healthcare industries (e.g., hospital environments and utilities), industrial applications (e.g., heating, ventilation, and air conditioning (HVAC)), and consumer products (e.g., sportswear and infant care).

The field of antimicrobial materials has been investigated, and several approaches have been developed. Regarding the production of antimicrobial polyolefins, for example, there are different ways to confer such property to the material, including, e.g., (i) applying an antimicrobial coating; (ii) directly incorporating antimicrobial agents into polyolefin through a compounding step; and (iii) copolymerization or grafting (e.g., through reactive extrusion) to immobilize antimicrobial agents or to impart antimicrobial functionalities into polyolefins by ionic or covalent linkages.

Antimicrobial agents that cannot survive elevated extrusion temperatures can be coated onto polyolefins, which also has the advantage of providing the antimicrobial agent on the surface of the materials that contact the microbes. However, this approach typically requires a secondary surface activation step (e.g., plasma/corona) to allow such a coating to be properly deposited. Such secondary processing steps can increase production time and expenses for downstream customers and manufacturers and are typically associated with lower material throughput.

A compounding approach has been attempted. However, such an approach has the disadvantage of incorporating much of the antimicrobial agent within the core of the material where it is not in contact with microbes and thus not directly contributing to the antimicrobial effect. Rather, the antimicrobial agent acts more like a pool of active agent that can migrate over time to the surface of the material. There are several commercially available antimicrobial additives for which efficacy has been proven on bacteria (e.g., through ISO 22196 testing) and mold and fungi (e.g., through ISO 846 testing) but rarely on viruses (e.g., through ISO 21702 testing). Additionally, such efficacy can only be achieved at relatively high loadings of the additive, rendering the compounding approach costly.

**SUMMARY**

A discovery has been made that provides a solution to at least one or more of the problems associated with antimicrobial additives in polymeric compositions. In one aspect, the discovery can include an antimicrobial composition including an antimicrobial additive dispersed in a polymeric composition (e.g., a polyolefin resin). The antimicrobial additive can be uniformly dispersed throughout the polymeric composition to allow, for example, the additive to be present at or near a surface of the resin and to be dispersed within the volume of the resin. This can allow for immediate and sustained antimicrobial activity of the polymeric compositions of the present disclosure. The antimicrobial additive can include a zinc compound or a copper compound, or a combination thereof. The antimicrobial composition can also include an antimicrobial promoter. Without wishing to be bound by theory, such an antimicrobial promoter can, in some aspects, promote or enable the antimicrobial activity of the antimicrobial additive, even at low concentrations at which the antimicrobial additive, alone, exhibits little to no antimicrobial activity. In some aspects, the antimicrobial promoter may have little to no antimicrobial activity or may have antimicrobial activity only at higher, less practical concentrations for polymer applications. Accordingly, in some aspects, the antimicrobial additive and antimicrobial promoter can act synergistically to produce antimicrobial activity that is greater than the antimicrobial activity of either the antimicrobial additive or antimicrobial promoter alone or that is greater than the sum of the antimicrobial activity of the antimicrobial additive and the antimicrobial promoter. Non-limiting advantages of the polymeric compositions of the present disclosure can include: (1) immediate antimicrobial activity (e.g., the antimicrobial agent can be present at a surface of the polymeric composition) and/or sustained antimicrobial activity (e.g., the antimicrobial agent can migrate to a surface of the polymeric composition over time); (2) retention of antimicrobial activity during the manufacturing process of the polymeric composition; (3) retention of antimicrobial activity during storage and/or use of the polymeric composition; and/or (4) reduced amount of antimicrobial agents in the polymeric composition.

An advantage of the antimicrobial additive of the present disclosure is that it is effective against bacteria and/or viruses while dispersed in the polymeric composition. For example, the antimicrobial composition containing the antimicrobial additive, and optionally, the antimicrobial promoter, has an antibacterial efficacy of at least, at most, exactly, or between (inclusive or exclusive) any two of 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, or greater, preferably 90%, preferably 99%, preferably 99.9%, or more preferably 99.99%, after 24 hours of incubation as measured by ISO 22196 testing, when the bacteria are, e.g., gram positive (e.g., *Staphylococcus aureus)* or gram negative (e.g., *Escherichia coli),* or a combination thereof. In another example, the antimicrobial composition containing the antimicrobial additive, and optionally, the antimicrobial promoter, has an antiviral efficacy of 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, or greater, preferably 90%, preferably 99%, preferably 99.9%, or more preferably 99.99%, after 24 hours of incubation as measured by ISO 21702 testing, when the viruses are, e.g., influenza or coronavirus, or a combination thereof. Advantageously, lower concentrations of antimicrobial additives can be used in the present antimicrobial compositions compared to conventional antimicrobial compositions and materials. Still further, the antimicrobial additives, and optionally, the antimicrobial promoters, included with polymeric matrices (e.g., a polyolefin resins) in the antimicrobial compositions of the present disclosure can advantageously withstand higher temperatures (e.g., 150 °C to 300 °C) when processing the antimicrobial compositions into articles of manufacture.

In one aspect of the present disclosure, antimicrobial compositions that include a polymer (e.g., a polyolefin resin) and an antimicrobial additive are described. An antimicrobial composition can include an antimicrobial additive dispersed in the polymer (e.g., a polyolefin resin). The antimicrobial additive can include a zinc compound or a copper compound, or a combination thereof. Accordingly, in certain aspects, the antimicrobial additive is a zinc compound. In certain aspects, the antimicrobial additive is a copper compound. In certain aspects, the antimicrobial additive is a zinc compound and a copper compound. The zinc compound can be, e.g., zinc pyrithione, zinc oxide, tetrapod-shaped zinc oxide, zinc hydroxide, zinc pyrrolidone, zinc dipyroglutamate, or a complex comprising zinc and a diacid or an anhydride thereof. The copper compound can be, e.g., a complex comprising copper and a diacid or an anhydride thereof. In some aspects, the diacid is maleic acid, malic acid, succinic acid, itaconic acid, phthalic acid, citric acid, tartaric acid, or aspartic acid. In certain aspects, the diacid of the zinc complex is maleic acid. In certain aspects, the diacid of the copper complex is maleic acid. In certain aspects, diacid of the zinc complex is maleic acid, and the diacid of the copper complex is maleic acid. In specific aspects, the zinc compound is tetrapod-shaped zinc oxide. In specific aspects, the zinc compound is zinc maleate. In some aspects, the zinc compound is not zinc pyrithione. In specific aspects, the copper compound is copper maleate. In some aspects, the antimicrobial additive is tetrapod-shaped zinc oxide, zinc maleate, or copper maleate, or a combination thereof.

The antimicrobial composition can include 0.01 wt. % to 3 wt. %, based on the total weight of the composition, of the antimicrobial additive (e.g., the zinc compound or the copper compound, or a combination thereof). For example, in some aspects, the antimicrobial composition can include 0.01 wt. % to 3 wt. %, based on the total weight of the composition, of a zinc compound (e.g., zinc pyrithione, zinc oxide, tetrapod-shaped zinc oxide, zinc hydroxide, zinc pyrrolidone, zinc dipyroglutamate), e.g., at least, at most, exactly, or between (inclusive or exclusive) any two of 0.010%, 0.015%, 0.02%, 0.025%, 0.03%, 0.035%, 0.04%, 0.045%, 0.05%, 0.055%, 0.06%, 0.065%, 0.07%, 0.075%, 0.08%, 0.085%, 0.09%, 0.095%, 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.00%, 1.05%, 1.10%, 1.15%, 1.20%, 1.25%, 1.30%, 1.35%, 1.40%, 1.45%, 1.50%, 1.55%, 1.60%, 1.65%, 1.70%, 1.75%, 1.80%, 1.85%, 1.90%, 1.95%, 2.00%, 2.05%, 2.10%, 2.15%, 2.20%, 2.25%, 2.30%, 2.35%, 2.40%, 2.45%, 2.50%, 2.55%, 2.60%, 2.65%, 2.70%, 2.75%, 2.80%, 2.85%, 2.90%, 2.95%, or 3.00%, by total weight of the composition, of the zinc compound. In some aspects, the antimicrobial composition can include 0.1 wt. % to 2 wt. %, based on the total weight of the composition, of a zinc compound (e.g., zinc pyrithione, zinc oxide, tetrapod-shaped zinc oxide). In some aspects, the antimicrobial composition can include 0.25 wt. % to 2 wt. %, based on the total weight of the composition, of a zinc compound (e.g., zinc maleate). In some aspects, the antimicrobial composition can include 0.4 wt. % to 2 wt. %, based on the total weight of the composition, of a zinc compound (e.g., tetrapod-shaped zinc oxide). In other aspects, the antimicrobial composition can include 0.01 wt. % to 3 wt. %, based on the total weight of the composition, of a copper compound (e.g., copper maleate), e.g., at least, at most, exactly, or between (inclusive or exclusive) any two of 0.010%, 0.015%, 0.02%, 0.025%, 0.03%, 0.035%, 0.04%, 0.045%, 0.05%, 0.055%, 0.06%, 0.065%, 0.07%, 0.075%, 0.08%, 0.085%, 0.09%, 0.095%, 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.00%, 1.05%, 1.10%, 1.15%, 1.20%, 1.25%, 1.30%, 1.35%, 1.40%, 1.45%, 1.50%, 1.55%, 1.60%, 1.65%, 1.70%, 1.75%, 1.80%, 1.85%, 1.90%, 1.95%, 2.00%, 2.05%, 2.10%, 2.15%, 2.20%, 2.25%, 2.30%, 2.35%, 2.40%, 2.45%, 2.50%, 2.55%, 2.60%, 2.65%, 2.70%, 2.75%, 2.80%, 2.85%, 2.90%, 2.95%, or 3.00%, by total weight of the composition, of the copper compound. In some aspects, the antimicrobial composition can include 0.25 wt. % to 2 wt. %, based on the total weight of the composition, of a copper compound (e.g., copper maleate). In still yet other aspects, the antimicrobial composition can include 0.01 wt. % to 3 wt. %, based on the total weight of the composition, of a combination of a zinc compound and a copper compound, e.g., at least, at most, exactly, or between (inclusive or exclusive) any two of 0.010%, 0.015%, 0.02%, 0.025%, 0.03%, 0.035%, 0.04%, 0.045%, 0.05%, 0.055%, 0.06%, 0.065%, 0.07%, 0.075%, 0.08%, 0.085%, 0.09%, 0.095%, 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.00%, 1.05%, 1.10%, 1.15%, 1.20%, 1.25%, 1.30%, 1.35%, 1.40%, 1.45%, 1.50%, 1.55%, 1.60%, 1.65%, 1.70%, 1.75%, 1.80%, 1.85%, 1.90%, 1.95%, 2.00%, 2.05%, 2.10%, 2.15%, 2.20%, 2.25%, 2.30%, 2.35%, 2.40%, 2.45%, 2.50%, 2.55%, 2.60%, 2.65%, 2.70%, 2.75%, 2.80%, 2.85%, 2.90%, 2.95%, or 3.00%, by total weight of the composition, of the combination of the zinc compound and the copper compound.

In some aspects, the antimicrobial composition further includes an antimicrobial promoter. The antimicrobial promoter can be an aliphatic acid or an aliphatic polyamine, or a combination thereof. Accordingly, in certain aspects, the antimicrobial promoter is an aliphatic acid. In certain aspects, the antimicrobial promoter is an aliphatic polyamine. In certain aspects, the antimicrobial promoter is an aliphatic acid and an aliphatic polyamine. The aliphatic acid can include atoms selected from the group consisting of carbon, hydrogen, and oxygen, and combinations thereof. The aliphatic polyamine can include atoms selected from the group consisting of carbon, hydrogen, oxygen, and nitrogen, and combinations thereof. In some aspects, the aliphatic acid comprises citric acid or caprylic acid, or a combination thereof. In some aspects, the aliphatic polyamine comprises a polyethylenimine or a polyetheramine, or a combination thereof. In some aspects, the polyetheramine is JEFFAMINE® D-2000, JEFFAMINE® T-3000, or JEFFAMINE® D-4000. In specific aspects, the polyetheramine is JEFFAMINE® T-3000. In some aspects, the antimicrobial promoter is citric acid, caprylic acid, a polyethylenimine, or a polyetheramine, or a combination thereof.

The antimicrobial composition can include 0.01 wt. % to 3 wt. %, based on the total weight of the composition, of the antimicrobial promoter (e.g., the aliphatic acid or the aliphatic polyamine, or a combination thereof). For example, in some aspects, the antimicrobial composition can include 0.01 wt. % to 3 wt. %, based on the total weight of the composition, of an aliphatic acid, e.g., at least, at most, exactly, or between (inclusive or exclusive) any two of 0.010%, 0.015%, 0.02%, 0.025%, 0.03%, 0.035%, 0.04%, 0.045%, 0.05%, 0.055%, 0.06%, 0.065%, 0.07%, 0.075%, 0.08%, 0.085%, 0.09%, 0.095%, 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.00%, 1.05%, 1.10%, 1.15%, 1.20%, 1.25%, 1.30%, 1.35%, 1.40%, 1.45%, 1.50%, 1.55%, 1.60%, 1.65%, 1.70%, 1.75%, 1.80%, 1.85%, 1.90%, 1.95%, 2.00%, 2.05%, 2.10%, 2.15%, 2.20%, 2.25%, 2.30%, 2.35%, 2.40%, 2.45%, 2.50%, 2.55%, 2.60%, 2.65%, 2.70%, 2.75%, 2.80%, 2.85%, 2.90%, 2.95%, or 3.00%, by total weight of the composition, of the aliphatic acid. In some aspects, the antimicrobial composition can include 0.04 wt. % to 2 wt. %, based on the total weight of the composition, of an aliphatic acid (e.g., citric acid, caprylic acid). In other aspects, the antimicrobial composition can include 0.01 wt. % to 3 wt. %, based on the total weight of the composition, of an aliphatic polyamine, e.g., at least, at most, exactly, or between (inclusive or exclusive) any two of 0.010%, 0.015%, 0.02%, 0.025%, 0.03%, 0.035%, 0.04%, 0.045%, 0.05%, 0.055%, 0.06%, 0.065%, 0.07%, 0.075%, 0.08%, 0.085%, 0.09%, 0.095%, 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.00%, 1.05%, 1.10%, 1.15%, 1.20%, 1.25%, 1.30%, 1.35%, 1.40%, 1.45%, 1.50%, 1.55%, 1.60%, 1.65%, 1.70%, 1.75%, 1.80%, 1.85%, 1.90%, 1.95%, 2.00%, 2.05%, 2.10%, 2.15%, 2.20%, 2.25%, 2.30%, 2.35%, 2.40%, 2.45%, 2.50%, 2.55%, 2.60%, 2.65%, 2.70%, 2.75%, 2.80%, 2.85%, 2.90%, 2.95%, or 3.00%, by total weight of the composition, of the aliphatic polyamine. In some aspects, the antimicrobial composition can include 0.1 wt. % to 0.4 wt. %, based on the total weight of the composition, of an aliphatic polyamine (e.g., a polyethylenimine, a polyetheramine). In still yet other aspects, the antimicrobial composition can include 0.01 wt. % to 3 wt. %, based on the total weight of the composition, of a combination of an aliphatic acid and an aliphatic polyamine, e.g., at least, at most, exactly, or between (inclusive or exclusive) any two of 0.010%, 0.015%, 0.02%, 0.025%, 0.03%, 0.035%, 0.04%, 0.045%, 0.05%, 0.055%, 0.06%, 0.065%, 0.07%, 0.075%, 0.08%, 0.085%, 0.09%, 0.095%, 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.00%, 1.05%, 1.10%, 1.15%, 1.20%, 1.25%, 1.30%, 1.35%, 1.40%, 1.45%, 1.50%, 1.55%, 1.60%, 1.65%, 1.70%, 1.75%, 1.80%, 1.85%, 1.90%, 1.95%, 2.00%, 2.05%, 2.10%, 2.15%, 2.20%, 2.25%, 2.30%, 2.35%, 2.40%, 2.45%, 2.50%, 2.55%, 2.60%, 2.65%, 2.70%, 2.75%, 2.80%, 2.85%, 2.90%, 2.95%, or 3.00%, by total weight of the composition, of the combination of the aliphatic acid and the aliphatic polyamine.

The polymer (e.g., polyolefin resin) can include a thermoplastic polymer, a thermoset polymer, or a blend thereof. Non-limiting examples of the thermoplastic polymer includes polypropylene, polyethylene, polybutylene, polyethylene terephthalate, polybutylene terephthalate, polycarbonate, polyetherimide, polyethyleneimine, styrene-acrylonitrile resin, ethylene vinyl acetate, ethylene propylene diene monomer, polyvinyl butyraldehyde, polyvinyl chloride, epoxy polymers, polyether ether ketone, poly(phenylene oxide), polyether ketone ketone, polysulfone sulfonate, polyphenylene sulfide, polyisobutylene, sulfonates of polysulfones, thermoplastic elastomer, terephthalic acid elastomers, poly(styrene-butadiene-styrene), polystyrene, acrylonitrile butyldiene styrene, poly(methyl methacrylate), blend of polycarbonate and polybutylene terephthalate, blend of polycarbonate-acrylonitrile butadiene styrene, acrylonitrile styrene acrylate, styrene acrylonitrile, blend of polyphenylene oxide and polystyrene, blend of polyphenylene oxide and polypropylene, elastomeric block co-polymers, blend of polycarbonate-polyethylene terephthalate, polyamide, or engineered thermoplastic compositions, or blends or copolymers thereof. In some aspects, the polymer (e.g., polyolefin resin) is polyethylene or polypropylene, or copolymers thereof, or blends thereof. In certain aspects, the polymer (e.g., polyolefin resin) is polypropylene.

The antimicrobial composition of the present disclosure can include, based on the total weight of the composition, at least 35 wt. % to 99.99 wt. % of the polymer (e.g., polyolefin resin), 0.01 wt. % to 3 wt. % of the antimicrobial additive (e.g., a zinc compound or a copper compound, or a combination thereof), optionally, 0.01 wt. % to 3 wt. % of the antimicrobial promoter (e.g., an aliphatic acid or an aliphatic polyamine, or a combination thereof), and optionally, 0 wt. % to 65 wt. % of other additives. Non-limiting examples of other additives include reinforcing fillers (e.g., short glass fibers, long glass fibers, talc, calcium carbonate, silica) antioxidants, heat stabilizers, nucleating agents, coupling agents, flame retardants, and processing aids.

In one aspect, the antimicrobial composition can include polypropylene and tetrapod-shaped zinc oxide, zinc maleate, or copper maleate, or a combination thereof. In some preferred aspects, the tetrapod-shaped zinc oxide is in an amount of 0.01 wt. % to 3 wt. %, based on the total weight of the composition. In more preferred aspects, the tetrapod-shaped zinc oxide is in an amount of 0.4 wt. % to 2 wt. %, based on the total weight of the composition. In some preferred aspects, the zinc maleate is in an amount of 0.01 wt. % to 3 wt. %, based on the total weight of the composition. In more preferred aspects, the zinc maleate is in an amount of 0.25 wt. % to 2 wt. , based on the total weight of the composition. In some preferred aspects, the copper maleate is in an amount of 0.01 wt. % to 3 wt. %, based on the total weight of the composition. In more preferred aspects, the copper maleate is an amount of 0.25 wt. % to 2 wt. %, based on the total weight of the composition. In one aspect, the antimicrobial composition can include polypropylene and 0.01 wt. % to 3 wt. % tetrapod-shaped zinc oxide, based on the total weight of the composition, preferably 0.4 wt. % to 2 wt. % tetrapod-shaped zinc oxide, based on the total weight of the composition. In one aspect, the antimicrobial composition can include polypropylene and 0.01 wt. % to 3 wt. % zinc maleate, based on the total weight of the composition, preferably 0.25 wt. % to 2 wt. % zinc maleate, based on the total weight of the composition. In one aspect, the antimicrobial composition can include polypropylene and 0.01 wt. % to 3 wt. % copper maleate, based on the total weight of the composition, preferably 0.25 wt. % to 2 wt. % copper maleate, based on the total weight of the composition.

In one aspect, the antimicrobial composition can include polypropylene and citric acid, caprylic acid, a polyethylenimine, or a polyetheramine, or a combination thereof. In some preferred aspects, the citric acid and/or caprylic acid are in an amount of 0.01 wt. % to 3 wt. %, based on the total weight of the composition. In more preferred aspects, the citric acid and/or caprylic acid are in an amount of 0.04 wt. % to 2 wt. %, based on the total weight of the composition. In some preferred aspects, the polyethylenimine and/or polyetheramine are in an amount of 0.01 wt. % to 3 wt. %, based on the total weight of the composition. In more preferred aspects, the polyethylenimine and/or polyetheramine are in an amount of 0.1 wt. % to 0.4 wt. %, based on the total weight of the composition.

In one aspect, the antimicrobial composition can include polypropylene; citric acid, caprylic acid, a polyethylenimine, or a polyetheramine, or a combination thereof; and zinc pyrithione, zinc oxide, or tetrapod-shaped zinc oxide, or a combination thereof. In some preferred aspects, the citric acid and/or caprylic acid are in an amount of 0.01 wt. % to 3 wt. %, based on the total weight of the composition. In more preferred aspects, the citric acid and/or caprylic acid are in an amount of 0.04 wt. % to 2 wt. %, based on the total weight of the composition. In some preferred aspects, the polyethylenimine and/or polyetheramine are in an amount of 0.01 wt. % to 3 wt. %, based on the total weight of the composition. In more preferred aspects, the polyethylenimine and/or polyetheramine are in an amount of 0.1 wt. % to 0.4 wt. %, based on the total weight of the composition. In some preferred aspects, the zinc pyrithione, zinc oxide, and/or tetrapod-shaped zinc oxide are in an amount of 0.01 wt. % to 3 wt. %, based on the total weight of the composition. In more preferred aspects, the zinc pyrithione, zinc oxide, and/or tetrapod-shaped zinc oxide are in an amount of 0.1 wt. % to 2 wt. %, based on the total weight of the composition. In one aspect, the antimicrobial composition can include polypropylene and 0.01 wt. % to 3 wt. % citric acid or caprylic acid, based on the total weight of the composition, preferably 0.04 wt. % to 2 wt. % citric acid or caprylic acid, based on the total weight of the composition. In one aspect, the antimicrobial composition can include polypropylene, 0.01 wt. % to 3 wt. % citric acid or caprylic acid, based on the total weight of the composition, preferably 0.04 wt. % to 2 wt. % citric acid or caprylic acid, based on the total weight of the composition, and 0.01 wt. % to 3 wt. % zinc pyrithione, zinc oxide, or tetrapod-shaped zinc oxide, based on the total weight of the composition, preferably 0.1 wt. % to 2 wt. % zinc pyrithione, zinc oxide, or tetrapod-shaped zinc oxide, based on the total weight of the composition. In one aspect, the antimicrobial composition can include polypropylene and 0.01 wt. % to 3 wt. % polyethylenimine or polyetheramine, based on the total weight of the composition, preferably, 0.1 wt. % to 0.4 wt. % polyethylenimine or polyetheramine, based on the total weight of the composition. In one aspect, the antimicrobial composition can include polypropylene, 0.01 wt. % to 3 wt. % polyethylenimine or polyetheramine, based on the total weight of the composition, preferably, 0.1 wt. % to 0.4 wt. % polyethylenimine or polyetheramine, based on the total weight of the composition, and 0.01 wt. % to 3 wt. % zinc pyrithione, zinc oxide, or tetrapod-shaped zinc oxide, based on the total weight of the composition, preferably, 0.1 wt. % to 2 wt. % zinc pyrithione, zinc oxide, or tetrapod-shaped zinc oxide, based on the total weight of the composition.

Advantageously, the antimicrobial composition has antibacterial and/or antiviral activity. For example, the antimicrobial composition of the present disclosure can be effective against bacteria and/or viruses. In one aspect, the antimicrobial composition has an antibacterial efficacy of at least, at most, exactly, or between (inclusive or exclusive) any two of 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, or greater, preferably 90%, preferably 99%, preferably 99.9%, or more preferably 99.99%, after 24 hours of incubation, as measured according to ISO 22196, where the bacteria comprise gram positive bacteria (e.g., *Staphylococcus aureus)* or gram negative bacteria (e.g., *Escherichia coli),* or a blend thereof. In one aspect, the antimicrobial composition has an antiviral efficacy of at least, at most, exactly, or between (inclusive or exclusive) any two of 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, or greater, preferably 90%, preferably 99%, preferably 99.9%, or more preferably 99.99%, after 24 hours of incubation, as measured according to ISO 21702, where the viruses comprise influenza or coronavirus, or a blend thereof.

In some aspects, the antimicrobial composition is a pellet, a powder, or a molded part. In other aspects, the antimicrobial composition can be an extrusion molded article, an injection molded article, a compression molded article, a rotational molded article, a blow molded article, an injection blow molded article, a 3-D printed article, a thermoformed article, a foamed article, or a cast film. In other aspects of the disclosure, article of manufactures that include the antimicrobial composition of the present disclosure are described. Non-limiting examples of articles of manufacture can include an exterior and/or interior vehicle part, an exterior and/or interior train part, an exterior and/or interior airplane part, an exterior and/or interior building part, an electrical device part, an electronic device part, an industrial device part, medical packing film and/or component, a medical tray, a blister pack, a medical component container, a food packing film, or a food container. In some aspects, the article of manufacture is a packing material (e.g., medical packing film or food packing film).

In specific aspects, the article of manufacture is a medical, industrial, or consumer product comprising an antimicrobial composition disclosed herein. In some aspects, the medical, industrial, or consumer product is exposed to a microbe, (e.g., a bacteria or virus), and the antimicrobial composition reduces, inhibits, or delays the replication or growth of the microbe.

Methods of preparing the antimicrobial compositions of the present disclosure are also described. A method can include combining (e.g., compounding) an antimicrobial additive that includes a zinc compound or a copper compound, or a combination thereof with a polymer matrix (e.g., a polyolefin resin) at 150 °C to 300 °C to produce the antimicrobial composition of the present disclosure. The zinc compound can be, e.g., zinc pyrithione, zinc oxide, tetrapod-shaped zinc oxide, zinc hydroxide, zinc pyrrolidone, zinc dipyroglutamate, or a complex comprising zinc and a diacid or an anhydride thereof. The copper compound can be, e.g., a complex comprising copper and a diacid or an anhydride thereof. Optionally, an antimicrobial promoter including an aliphatic acid or an aliphatic polyamine can also be compounded with the antimicrobial additive and the polymer matrix. The aliphatic acid can include atoms selected from the group consisting of carbon, hydrogen, and oxygen, and combinations thereof. The aliphatic polyamine can include atoms selected from the group consisting of carbon, hydrogen, oxygen, and nitrogen, and combinations thereof. In some aspects, the aliphatic acid comprises citric acid or caprylic acid, or a combination thereof. In some aspects, the aliphatic polyamine comprises a polyethylenimine or a polyetheramine, or a combination thereof.

Also disclosed herein are the following Aspects 1-15. Aspect 1 is an antimicrobial composition comprising: a polyolefin resin; and 0.01 wt. % to 3 wt. % of a zinc compound or a copper compound, based on the total weight of the composition, or a combination thereof uniformly dispersed throughout the polyolefin resin, wherein the composition has antibacterial and/or antiviral activity. Aspect 2 is the composition of aspect 1, further comprising an antimicrobial promoter, preferably in an amount of 0.01 wt. % to 3 wt. %, based on the total weight of the composition. Aspect 3 is the composition of aspect 2, wherein the antimicrobial promoter comprises an aliphatic acid or an aliphatic polyamine, or a combination thereof, preferably, wherein the aliphatic acid comprises atoms selected from the group consisting of carbon, hydrogen, oxygen, and combinations thereof, and/or wherein the aliphatic polyamine comprises atoms selected from the group consisting of carbon, hydrogen, oxygen, nitrogen, and combinations thereof, preferably, wherein the aliphatic acid comprises citric acid, caprylic acid, or a combination thereof, and/or preferably, wherein the aliphatic polyamine comprises a polyethylenimine, a polyetheramine, or a combination thereof. Aspect 3 is the composition of any one of aspects 1-3, wherein: the zinc compound comprises zinc pyrithione, zinc oxide, tetrapod-shaped zinc oxide, zinc hydroxide, zinc pyrrolidone, zinc dipyroglutamate, or a complex comprising zinc and a diacid or an anhydride thereof; and/or the copper compound comprises a complex comprising copper and a diacid or an anhydride thereof, preferably, wherein the diacid comprises maleic acid, malic acid, succinic acid, itaconic acid, phthalic acid, citric acid, tartaric acid, or aspartic acid, and/or preferably, wherein the diacid of the zinc complex comprises maleic acid and/or the diacid of the copper complex comprises maleic acid. Aspect 5 is the composition of any one of aspects 1-4, wherein the polyolefin resin comprises polyethylene, polypropylene, ethylene vinyl acetate, polyvinyl butyraldehyde, polybutylene, polyisobutylene, ethylene propylene diene monomer, poly(styrenebutadiene-styrene), polystyrene, acrylonitrile butadiene styrene, acrylonitrile styrene acrylate, or styrene acrylonitrile, or a combination thereof, preferably, wherein the polyolefin resin comprises polypropylene. Aspect 6 is the composition of any one of aspects 1-5, comprising: polypropylene; and tetrapod-shaped zinc oxide, zinc maleate, or copper maleate, or a combination thereof, preferably, wherein the tetrapod-shaped zinc oxide is in an amount of 0.01 wt. % to 3 wt. %, based on the total weight of the composition, more preferably, the tetrapod-shaped zinc oxide is in an amount of 0.4 wt. % to 2 wt. %, based on the total weight of the composition, preferably, wherein the zinc maleate is in an amount of 0.01 wt. % to 3 wt. %, based on the total weight of the composition, more preferably, wherein the zinc maleate is in an amount of 0.25 wt. % to 2 wt. % based on the total weight of the composition, and/or preferably, wherein the copper maleate is in an amount of 0.01 wt. % to 3 wt. %, based on the total weight of the composition, more preferably, wherein the copper maleate is an amount of 0.25 wt. % to 2 wt. %, based on the total weight of the composition. Aspect 7 is the composition of any one of aspects 1-6, comprising: polypropylene and 0.01 wt. % to 3 wt. % tetrapod-shaped zinc oxide, based on the total weight of the composition, preferably 0.4 wt. % to 2 wt. % tetrapod-shaped zinc oxide, based on the total weight of the composition; polypropylene and 0.01 wt. % to 3 wt. % zinc maleate, based on the total weight of the composition, preferably 0.25 wt. % to 2 wt. % zinc maleate, based on the total weight of the composition; or polypropylene and 0.01 wt. % to 3 wt. % copper maleate, based on the total weight of the composition, preferably 0.25 wt. % to 2 wt. % copper maleate, based on the total weight of the composition. Aspect 8 is the composition of any one of aspects 2-7, comprising: polypropylene; and citric acid, caprylic acid, a polyethylenimine, a polyetheramine, or a combination thereof, preferably, wherein the citric acid and caprylic acid are in an amount of 0.01 wt. % to 3 wt. %, based on the total weight of the composition, more preferably, wherein the citric acid and caprylic acid are in an amount of 0.04 wt. % to 2 wt. %, based on the total weight of the composition, and/or preferably, wherein the polyethylenimine and the polyetheramine are in an amount of 0.01 wt. % to 3 wt. %, based on the total weight of the composition, more preferably, wherein the polyethylenimine and the polyetheramine are in an amount of 0.1 wt. % to 0.4 wt. %, based on the total weight of the composition. Aspect 9 is the composition of any one of aspects 2-8, comprising: polypropylene; and citric acid, caprylic acid, a polyethylenimine, or a polyetheramine, or a combination thereof; and zinc pyrithione, zinc oxide, or tetrapod-shaped zinc oxide, or a combination thereof, preferably, wherein the citric acid and caprylic acid are in an amount of 0.01 wt. % to 3 wt. %, based on the total weight of the composition, more preferably, wherein the citric acid and caprylic acid are in an amount of 0.04 wt. % to 2 wt. %, based on the total weight of the composition, preferably wherein the polyethylenimine and the polyetheramine are in an amount of 0.01 wt. % to 3 wt. %, based on the total weight of the composition, more preferably, wherein the polyethylenimine and the polyetheramine are in an amount of 0.1 wt. % to 0.4 wt. %, based on the total weight of the composition, and/or preferably, wherein the zinc pyrithione, zinc oxide, and tetrapod-shaped zinc oxide are in an amount of 0.01 wt. % to 3 wt. %, based on the total weight of the composition, more preferably, wherein the zinc pyrithione, zinc oxide, and tetrapod-shaped zinc oxide are in an amount of 0.1 wt. % to 2 wt. %, based on the total weight of the composition. Aspect 10 is the composition of any one of aspects 2-9, comprising: polypropylene and 0.01 wt. % to 3 wt. % citric acid or caprylic acid, based on the total weight of the composition, preferably 0.04 wt. % to 2 wt. % citric acid or caprylic acid, based on the total weight of the composition; polypropylene, 0.01 wt. % to 3 wt. % citric acid or caprylic acid, based on the total weight of the composition, preferably 0.04 wt. % to 2 wt. % citric acid or caprylic acid, based on the total weight of the composition, and 0.01 wt. % to 3 wt. % zinc pyrithione, zinc oxide, or tetrapod-shaped zinc oxide, based on the total weight of the composition, preferably 0.1 wt. % to 2 wt. % zinc pyrithione, zinc oxide, or tetrapod-shaped zinc oxide, based on the total weight of the composition; polypropylene and 0.01 wt. % to 3 wt. % of a polyethylenimine or a polyetheramine, based on the total weight of the composition, preferably, 0.1 wt. % to 0.4 wt. % of a polyethylenimine or a polyetheramine, based on the total weight of the composition; or polypropylene, 0.01 wt. % to 3 wt. % of a polyethylenimine or a polyetheramine, based on the total weight of the composition, preferably, 0.1 wt. % to 0.4 wt. % of a polyethylenimine or a polyetheramine, based on the total weight of the composition, and 0.01 wt. %to 3 wt. % zinc pyrithione, zinc oxide, or tetrapod-shaped zinc oxide, based on the total weight of the composition, preferably, 0.1 wt. % to 2 wt. % zinc pyrithione, zinc oxide, or tetrapod-shaped zinc oxide, based on the total weight of the composition. Aspect 11 is the composition of any one of aspects 1-10, wherein the composition does not comprise zinc pyrithione.

Aspect 12 is a medical, industrial, or consumer product comprising the composition of any one of aspects 1-11. Aspect 13 is the medical, industrial, or consumer product of aspect 12, wherein the medical, industrial, or consumer product is exposed to a microbe, preferably, a bacteria or virus, and wherein the composition of any one of aspects 1-11 reduces replication of the microbe.

Aspect 14 is a method of manufacturing a medical, industrial, or consumer product comprising the composition of any one of aspects 1-11, the method comprising thermoforming, extruding, injection molding, blow molding, film blowing, film casting, or fiber spinning the composition of any one of aspects 1-11 to produce the medical, industrial, or consumer product.

Aspect 15 is a method of reducing microbial growth on a surface of a medical, industrial, or consumer product comprising the composition of any one of aspects 1-11, the method comprising exposing the surface of the product to a microbe, wherein microbial growth on the surface of the product is reduced or inhibited.

Other embodiments of the disclosure are discussed throughout this application. Any embodiment discussed with respect to one aspect of the disclosure applies to other aspects of the disclosure as well and vice versa. Each embodiment described herein is understood to be embodiments of the disclosure that are applicable to other aspects of the disclosure. It is contemplated that any embodiment or aspect discussed herein can be combined with other embodiments or aspects discussed herein and/or implemented with respect to any method or composition of the disclosure, and vice versa. Furthermore, compositions of the disclosure can be used to achieve methods of the disclosure.

The following includes definitions of various terms and phrases used throughout this specification.

The terms "about" or "approximately" are defined as being close to as understood by one of ordinary skill in the art. In one non-limiting embodiment, the terms are defined to be within 10%, preferably within 5%, more preferably within 1%, and most preferably within 0.5%.

The terms "wt. %," "vol.%", or "mol.%" refers to a weight percentage of a component, a volume percentage of a component, or molar percentage of a component, respectively, based on the total weight of the material, the total volume of material, or total moles, which includes the component. In a non-limiting example, 10 grams of component in 100 grams of the material is 10 wt. % of the component.

The term "substantially" and its variations are defined to include ranges within 10%, within 5%, within 1%, or within 0.5%.

The terms "inhibiting" or "reducing" or "preventing" or "avoiding" or any variation of these terms, when used in the claims and/or the specification includes any measurable decrease or complete inhibition to achieve a desired result.

The term "effective," as that term is used in the specification and/or claims, means adequate to accomplish a desired, expected, or intended result.

The use of the words "a" or "an" when used in conjunction with any of the terms "comprising," "including," "containing," or "having" in the claims, or the specification, may mean "one," but it is also consistent with the meaning of "one or more," "at least one," and "one or more than one."

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The polymeric compositions of the present disclosure can "comprise," "consist essentially of," or "consist of" particular ingredients, components, compositions, *etc.* disclosed throughout the specification. With respect to the transitional phrase "consisting essentially of," in one non-limiting aspect, a basic and novel characteristic of the polymeric compositions of the present disclosure are their abilities to provide protection against microorganisms and/or viruses.

Other objects, features and advantages of the present disclosure will become apparent from the following figures, detailed description, and examples. It should be understood, however, that the figures, detailed description, and examples, while indicating specific embodiments of the disclosure, are given by way of illustration only and are not meant to be limiting. Additionally, it is contemplated that changes and modifications within the spirit and scope of the disclosure will become apparent to those skilled in the art from this detailed description. In further embodiments, features from specific embodiments may be combined with features from other embodiments. For example, features from one embodiment may be combined with features from any of the other embodiments. In further embodiments, additional features may be added to the specific embodiments described herein.

## BRIEF DESCRIPTION OF THE DRAWINGS

The following drawings form part of the present specification and are included to further demonstrate certain aspects of the present disclosure. The present disclosure may be better understood by reference to one or more of these drawings in combination with the detailed description of specific aspects presented herein.

FIG. 1 is an overview of the X-ray computer tomography (CT) scanning principle performed to assess the three-dimensional structure of the polymeric compositions disclosed herein.

FIG. 2 shows three cross-sections of the reconstructed images a polymeric composition including polypropylene, 2 wt% tetrapod-shaped ZnO, and 2 wt% erucamide.

FIGs. 3A-3C show three-dimensional representations of a polymeric composition including polypropylene, 2 wt% tetrapod-shaped ZnO, and 2 wt% erucamide.

## DETAILED DESCRIPTION

A discovery has been made that provides a solution to at least one or more of the problems associated with antimicrobial additives in polymeric compositions. In one aspect, the discovery can include an antimicrobial additive dispersed in a polymeric composition. The antimicrobial additive can be uniformly dispersed throughout the polymeric composition (e.g., at a surface and throughout the volume of the composition), which can provide for immediate and/or sustained antimicrobial activity of the polymeric composition. The antimicrobial additive can include a zinc compound or a copper compound, or a combination thereof. In addition, the antimicrobial composition can include an antimicrobial promoter. The incorporation of the zinc and/or copper compound, and optionally, the antimicrobial promoter, into the polymer composition imparts antimicrobial properties to the resulting composition. The compositions can help protect (e.g., prevent or reduce microbial growth) against infectious or deadly microorganisms (e.g., bacteria and/or viruses). These antimicrobial additives can withstand elevated extrusion temperatures and retain good antimicrobial activity even at lower concentrations to reduce costs of producing the antimicrobial compositions and articles of manufacture including such compositions.

These and other non-limiting aspects of the present disclosure are discussed in further detail in the following sections.

### A. Polymeric Composition

The antimicrobial composition of the present disclosure can include a polymer matrix (e.g., a polyolefin resin), an antimicrobial additive on the surface of and/or dispersed in the polymer matrix, optionally, an antimicrobial promoter, and optionally, other additives. The antimicrobial composition contains at least 35 wt. % to 99.99 wt. % of the polymer matrix, 0.01 wt. % to 3 wt. % of the antimicrobial additive, optionally, 0.01 wt. % to 3 wt. % of the antimicrobial promoter, and optionally, 0 wt. % to 65 wt. % of other additives. Advantageously, the polymer composition has antimicrobial activity, even at lower concentrations of the antimicrobial additives compared to conventional antimicrobial polymeric compositions.

The antimicrobial composition can be in a pellet form, a powder, or a molded part. In some aspects, the antimicrobial composition is an extrusion molded article, an injection molded article, a compression molded article, a rotational molded article, a blow molded article, an injection blow molded article, a 3-D printed article, a thermoformed article, a foamed article, or a cast film. In some aspects, an article of manufacturing (e.g., packaging) includes the antimicrobial composition of the present disclosure. Non-limiting examples of an article of manufacture can include an exterior and/or interior vehicle part, an exterior and/or interior train part, an exterior and/or interior airplane part, an exterior and/or interior building part, an electrical device part, an electronic device part, an industrial device part, packaging, medical packing film and/or component, a medical tray, a blister pack, a medical component container, a food packing film, or a food container. The antimicrobial composition, and thus, the article of manufacture, has an efficacy against bacteria and/or viruses. In a preferred aspect, and due to the presence of the antimicrobial additive, and optionally, the antimicrobial promoter, an antibacterial (e.g., gram positive (e.g., *Staphylococcus aureus)* or gram negative (e.g., *Escherichia coli),* or a blend thereof) efficacy of at least, at most, exactly, or between (inclusive or exclusive) any two of 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, or greater, preferably 90%, preferably 99%, preferably 99.9%, or more preferably 99.99%, after 24 hours of incubation, as measured according to ISO 22196, can be realized for the antimicrobial compositions of the present disclosure. In other aspects, and due to the presence of the antimicrobial additive, and optionally, the antimicrobial promoter, an antiviral (e.g., influenza or coronavirus) efficacy of at least, at most, exactly, or between (inclusive or exclusive) any two of 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, or greater, preferably 90%, preferably 99%, preferably 99.9%, or more preferably 99.99%, after 24 hours of incubation, as measured according to ISO 21702, can be realized for the antimicrobial compositions of the present disclosure.

## 1. Antimicrobial Additives

The antimicrobial additive can be a zinc compound or a copper compound, or a combination thereof. Without wishing to be bound by theory, zinc and/or copper compounds can, in some aspects, act alone or synergistically on the surface of and/or dispersed in the polymers to increase the antimicrobial effect of the polymeric composition.

Non-limiting examples of zinc compounds include zinc pyrithione, zinc oxide, tetrapod-shaped zinc oxide, zinc hydroxide, zinc pyrrolidone, zinc dipyroglutamate, and other complexes comprising zinc and a diacid or an anhydride thereof, i.e., zinc salts, including zinc bromide, zinc chloride, zinc iodide, zinc carbonate, zinc hydroxycarbonate, zinc nitrate, zinc oxalate, zinc formate, zinc acetate, zinc fumarate, zinc picolinate, zinc propionate, zinc benzoate, zinc lactate, zinc succinate, zinc itaconate, zinc phthalate, zinc ascorbate, zinc citrate, zinc tartrate, zinc lactate, zinc gluconate, zinc glycinate, zinc glycolate, zinc sulfate, zinc dipyroglutamate, zinc malate, zinc maleate, zinc aspartate, zinc ammonium chloride, acetylacetonate zinc, ammonium teraclorocincate, zinc oxychloride, zinc methanesulfonate, zinc sulfamate, zinc undecylenate, zinc salts of omega fatty acids, zinc polyacrylate, zinc polylactate, zinc polyglycolate, zinc polymaleate, and their mixtures. In some aspects, the zinc compound is zinc pyrithione, zinc oxide, tetrapod-shaped zinc oxide, zinc hydroxide, zinc pyrrolidone, zinc dipyroglutamate, zinc malate, zinc maleate, zinc succinate, zinc itaconate, zinc phthalate, zinc citrate, zinc tartrate, or zinc aspartate. In certain aspects, the zinc compound is zinc pyrithione. In certain aspects, the zinc compound is zinc oxide. In certain aspects, the zinc compound is tetrapod-shaped zinc oxide. In certain aspects, the zinc compound is zinc maleate. Any one or more of the foregoing zinc compounds may be excluded as antimicrobial additives from polymeric compositions of the disclosure. In some aspects, the polymeric compositions do not include zinc pyrithione. In some aspects, zinc pyrithione is not utilized as an antimicrobial additive.

Non-limiting examples of complexes comprising copper and a diacid or an anhydride thereof, i.e., copper salts, include copper bromide, copper chloride, copper iodide, copper carbonate, copper hydroxycarbonate, copper nitrate, copper hydroxynitrate, copper oxalate, copper dithionate, copper glycerophosphate, copper halides, copper fluorosilicate, copper formate, copper acetate, copper propionate, copper benzoate, copper lactate, copper gluconate, copper glycolate, copper malate, copper maleate, copper phenolsulfonate, copper salicylate, copper stearate, copper succinate, copper itaconate, copper phthalate, copper tartrate, copper citrate, copper aspartate, copper hydroxide, copper oxide, copper oxychloride, copper sulfate, copper pyrithione, copper acetylacetonate, copper methanesulfonate, copper sulphamate, and their mixtures. In some aspects, the copper compound is copper malate, copper maleate, copper succinate, copper itaconate, copper phthalate, copper citrate, copper tartrate, or copper aspartate. In certain aspects, the copper compound is copper maleate. Any one or more of the foregoing copper compounds may be excluded as antimicrobial additives from polymeric compositions of the disclosure.

The antimicrobial composition can include at least, at most, exactly, or between (inclusive or exclusive) any two of 0.01 wt. % to 3.0 wt. % or 0.010%, 0.015%, 0.02%, 0.025%, 0.03%, 0.035%, 0.04%, 0.045%, 0.05%, 0.055%, 0.06%, 0.065%, 0.07%, 0.075%, 0.08%, 0.085%, 0.09%, 0.095%, 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.00%, 1.05%, 1.10%, 1.15%, 1.20%, 1.25%, 1.30%, 1.35%, 1.40%, 1.45%, 1.50%, 1.55%, 1.60%, 1.65%, 1.70%, 1.75%, 1.80%, 1.85%, 1.90%, 1.95%, 2.00%, 2.05%, 2.10%, 2.15%, 2.20%, 2.25%, 2.30%, 2.35%, 2.40%, 2.45%, 2.50%, 2.55%, 2.60%, 2.65%, 2.70%, 2.75%, 2.80%, 2.85%, 2.90%, 2.95%, or 3.00%, by total weight of the composition, of the antimicrobial additive. In one aspect, the antimicrobial composition includes at least, at most, exactly, or between (inclusive or exclusive) any two of 0.4 wt. % to 2 wt. % or 0.40%, 0.45%, 0.50%, 0.55%, 0.60%, 0.65%, 0.70%, 0.75%, 0.80%, 0.85%, 0.90%, 0.95%, 1.00%, 1.05%, 1.10%, 1.15%, 1.20%, 1.25%, 1.30%, 1.35%, 1.40%, 1.45%, 1.50%, 1.55%, 1.60%, 1.65%, 1.70%, 1.75%, 1.80%, 1.85%, 1.90%, 1.95%, or 2.00%, of tetrapod-shaped zinc oxide. In one aspect, the antimicrobial composition includes at least, at most, exactly, or between (inclusive or exclusive) any two of 0.25 wt. % to 2 wt. % or 0.25%, 0.30%, 0.35%, 0.4 wt. % to 2 wt. % or 0.40%, 0.45%, 0.50%, 0.55%, 0.60%, 0.65%, 0.70%, 0.75%, 0.80%, 0.85%, 0.90%, 0.95%, 1.00%, 1.05%, 1.10%, 1.15%, 1.20%, 1.25%, 1.30%, 1.35%, 1.40%, 1.45%, 1.50%, 1.55%, 1.60%, 1.65%, 1.70%, 1.75%, 1.80%, 1.85%, 1.90%, 1.95%, or 2.00%, of zinc maleate. In one aspect, the antimicrobial composition includes at least, at most, exactly, or between (inclusive or exclusive) any two of 0.1 wt. % to 2 wt. % or 0.10%, 0.15%, 0.20%, 0.25%, 0.30%, 0.35%, 0.4 wt. % to 2 wt. % or 0.40%, 0.45%, 0.50%, 0.55%, 0.60%, 0.65%, 0.70%, 0.75%, 0.80%, 0.85%, 0.90%, 0.95%, 1.00%, 1.05%, 1.10%, 1.15%, 1.20%, 1.25%, 1.30%, 1.35%, 1.40%, 1.45%, 1.50%, 1.55%, 1.60%, 1.65%, 1.70%, 1.75%, 1.80%, 1.85%, 1.90%, 1.95%, or 2.00%, of zinc pyrithione, zinc oxide, and/or tetrapod-shaped zinc oxide.

## 2. Antimicrobial Promoters

The antimicrobial promoter can be an aliphatic acid or an aliphatic polyamine, or a combination thereof. Without wishing to be bound by theory, the antimicrobial promoters can, in some aspects, act alone or synergistically with antimicrobial additives on the surface of the polymers to increase the antimicrobial effect of the polymeric composition.
Non-limiting examples of antimicrobial promoters include saturated and/or unsaturated fatty acids, fatty acid esters, fatty acid amides, polyacids, polyols (e.g., glycerol, pentaerythritol), and polyamines (e.g., polyethyleneimine, polyetheramine).
Non-limiting examples of aliphatic acids include aliphatic acids comprising atoms selected from the group consisting of carbon, hydrogen, oxygen, and combinations thereof, citric acid, caprylic acid, or a combination thereof. Non-limiting examples of aliphatic polyamines include aliphatic polyamines comprising atoms selected from the group consisting of carbon, hydrogen, oxygen, nitrogen, and combinations thereof, a polyethylenimine (e.g., branched or linear polyethylenimine), a polyetheramine, or a combination thereof. Any one or more of the foregoing aliphatic acids may be excluded as promoters from polymeric compositions of the disclosure.
Non-limiting examples of polyetheramines include monoamines, diamines and triamines attached to a polyether backbone typically based on ethylene oxide (EO), propylene oxide (PO) or a mix of such compounds, e.g., JEFFAMINE® M-series monoamines, JEFFAMINE® D-series diamines (e.g., JEFFAMINE® D-2000, JEFFAMINE® D-4000), JEFFAMINE® ED-series diamines, JEFFAMINE® EDR-series diamines, and JEFFAMINE® T-series triamines (e.g., JEFFAMINE® T-3000). Any one or more of the foregoing polyetheramines may be excluded as promoters from polymeric compositions of the disclosure.
The antimicrobial composition can include at least, at most, exactly, or between (inclusive or exclusive) any two of 0.01 wt. % to 3.0 wt. % or 0.010%, 0.015%, 0.02%, 0.025%, 0.03%, 0.035%, 0.04%, 0.045%, 0.05%, 0.055%, 0.06%, 0.065%, 0.07%, 0.075%, 0.08%, 0.085%, 0.09%, 0.095%, 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.00%, 1.05%, 1.10%, 1.15%, 1.20%, 1.25%, 1.30%, 1.35%, 1.40%, 1.45%, 1.50%, 1.55%, 1.60%, 1.65%, 1.70%, 1.75%, 1.80%, 1.85%, 1.90%, 1.95%, 2.00%, 2.05%, 2.10%, 2.15%, 2.20%, 2.25%, 2.30%, 2.35%, 2.40%, 2.45%, 2.50%, 2.55%, 2.60%, 2.65%, 2.70%, 2.75%, 2.80%, 2.85%, 2.90%, 2.95%, or 3.00%, by total weight of the composition, of the antimicrobial promoter. In one aspect, the antimicrobial composition includes at least, at most, exactly, or between (inclusive or exclusive) any two of 0.04 wt. % to 2 wt. % or 0.04%, 0.045%, 0.05%, 0.055%, 0.06%, 0.065%, 0.07%, 0.075%, 0.08%, 0.085%, 0.09%, 0.095%, 0.10%, 0.15%, 0.20%, 0.25%, 0.30%, 0.35%, 0.40%, 0.45%, 0.50%, 0.55%, 0.60%, 0.65%, 0.70%, 0.75%, 0.80%, 0.85%, 0.90%, 0.95%, 1.00%, 1.05%, 1.10%, 1.15%, 1.20%, 1.25%, 1.30%, 1.35%, 1.40%, 1.45%, 1.50%, 1.55%, 1.60%, 1.65%, 1.70%, 1.75%, 1.80%, 1.85%, 1.90%, 1.95%, or 2.00%, of citric acid and/or caprylic acid. In one aspect, the antimicrobial composition includes at least, at most, exactly, or between (inclusive or exclusive) any two of 0.1 wt. % to 0.4 wt. % or 0.10%, 0.15%, 0.20%, 0.25%, 0.30%, 0.35%, or 0.40 wt. %, of a polyethylenimine and/or a polyetheramine.

## 3. Polymeric Matrices

The polymeric matrix (e.g., polyolefin resin) of antimicrobial compositions of the present disclosure can include thermoplastic polymers, thermoset polymers, co-polymers thereof, or blends thereof. Amounts of the polymer matrix in the polymer composition can range from 35 wt. % to 99.99 wt. % or at least, at most, exactly, or between (inclusive or exclusive) any two of 35 wt. %, 40 wt. %, 45 wt. %, 50 wt. %, 55 wt. %, 60 wt. %, 65 wt. %, 70 wt. %, 75 wt. %, 80 wt. %, 85 wt. %, 90 wt. %, 95 wt. %, 96 wt. %, 97 wt. %, 98 wt. %, 99 wt. %, or 99.99 wt. %. Thermoplastic polymeric matrices can become pliable or moldable above a specific temperature and solidify below the temperature.
Non-limiting examples of the thermoplastic polymer includes polypropylene, polyethylene, polybutylene, polyethylene terephthalate, polybutylene terephthalate, polycarbonate, polyetherimide, polyethyleneimine, styrene-acrylonitrile resin, ethylene vinyl acetate, ethylene propylene diene monomer, polyvinyl butyraldehyde, polyvinyl chloride, epoxy polymers, polyether ether ketone, poly(phenylene oxide), polyether ketone ketone, polysulfone sulfonate, polyphenylene sulfide, polyisobutylene, sulfonates of polysulfones, thermoplastic elastomer, terephthalic acid elastomers, poly(styrene-butadiene-styrene), polystyrene, acrylonitrile butyldiene styrene, poly(methyl methacrylate), blend of polycarbonate and polybutylene terephthalate, blend of polycarbonate-acrylonitrile butadiene styrene, acrylonitrile styrene acrylate, styrene acrylonitrile, blend of polyphenylene oxide and polystyrene, blend of polyphenylene oxide and polypropylene, elastomeric block co-polymers, blend of polycarbonate-polyethylene terephthalate, polyamide, or engineered thermoplastic compositions, or blends or copolymers thereof. In some aspects, the polymer (e.g., polyolefin resin) is polyethylene or polypropylene, or copolymers thereof, or blends thereof. In addition to these, other thermoplastic polymers known to those of skill in the art, and those hereinafter developed, can also be used in the context of the present disclosure. In some aspects, preferred thermoplastic polymers include polypropylene, polyamide, polyethylene terephthalate, a polycarbonate (PC) family of polymers, polybutylene terephthalate, poly(phenylene oxide) (PPO), polyetherimide, polyethylene, co-polymers thereof, or blends thereof. In more preferred aspects, the thermoplastic polymers include polyethylene, polypropylene, copolymers thereof, or blends thereof.

Thermoset polymers are polymers that cross-link or cure irreversibly. Thermoset polymers are malleable prior to heating and capable of forming a mold. The matrix can be made from a composition having a thermoplastic polymer and can also include other non-thermoplastic polymers, additives, and the like, that can be added to the composition. Thermoset polymeric matrices are cured or become cross-linked and tend to lose the ability to become pliable or moldable at raised temperatures. Non-limiting examples of thermoset polymers used to make the polymer film include epoxy resins, epoxy vinylesters, alkyds, amino-based polymers (e.g., polyurethanes, urea-formaldehyde), diallyl phthalate, phenolics polymers, polyesters, unsaturated polyester resins, dicyclopentadiene, polyimides, silicon polymers, cyanate esters of polycyanurates, thermosetting polyacrylic resins, bakelite, duroplast, benzoxazines, or co-polymers thereof, or blends thereof.

When the polymers are thermoplastic, methods can be applied as known in the art, including but not limited to: extrusion of the thermoplastic and mixing of the antimicrobial additives, and optionally, the antimicrobial promoters, of the present disclosure in the molten state of the polymer, whether continuous or batch; turbomixing the antimicrobial additives, and optionally, the antimicrobial promoters, of the present disclosure with thermoplastic powder to form a mixture that can later be treated by extrusion or by other processes known in the state of the art; and injection to form thermoplastic objects that can be carried out by mixing the thermoplastic polymer with the antimicrobial additives, and optionally, the antimicrobial promoters, of the present disclosure. The materials obtained in the form of pellets, plates, or fiber after these processes can be molded or shaped by different techniques such as film blowing, injection on mold, plate extrusion, foaming, or pressing in hot plates, or other methods known in the art.

When the polymers are thermoset, methods can be applied as known in the art, including but not limited to mixing with stirring the thermosetting polymer and the antimicrobial additives, and optionally, the antimicrobial promoters, disclosed herein when the polymer is dispersed or dissolved in aqueous media or organic solvents. The thermosetting polymer can also be in a liquid or pasty state when dispersed or dissolved in reactive monomers, as in the case of unsaturated polyester resins, epoxy vinyl ester and epoxy, among others. Agitation can be carried out by means of systems known in the art, such as agitation by means of marine type propellers, cowls, anchors, or others, depending on the viscosity of the thermosetting polymer.

When the polymers are part of coatings or thin layers, methods can be applied as known in the art, including but not limited to mixing with stirring the coating polymer and the antimicrobial additives, and optionally, the antimicrobial promoters, disclosed herein when the coating is in a liquid state or pasty, either because it is dispersed or dissolved in aqueous media or because the polymer is dispersed or dissolved in organic solvents, such as acetone, toluene, glycol ethers, or others. The coating can also be dispersed or dissolved in reactive monomers. Agitation can be carried out by means of systems known in the art, such as agitation by means of marine type propellers, cowls, anchors, or others, depending on the viscosity of the coating or thin layer polymer.

Both the thermosetting resins and the coatings, to which the antimicrobial additives, and optionally, the antimicrobial promoters, of the present disclosure have been added, can be mixed with other components such as inorganic solids, organic solids, colorants, pigments and other components necessary for their process and are molded or applied by means of techniques known in the state of the art such as forming in molds, SMC, BMC, spray, painting, coating with rollers and are polymerized, cross-linked or solidified by methods known in the state of the art, such as application of heat, catalysts or reagents provided to this end.

The thermoplastic, thermosetting resins, and coatings, to which the antimicrobial additives, and optionally, the antimicrobial promoters, of the present disclosure have been added, can be mixed with other components such as inorganic solids, organic solids, colorants, pigments and other components necessary for their process, and can be molded or applied by means of techniques known in the art such as forming in molds, SMC, BMC, spray, painting, coating with rollers and are polymerized, cross-linked or solidified by methods known in the state of the art, such as application of heat, catalysts or reagents provided to this end.

## 4. Other Additives

The antimicrobial composition of the present disclosure can include an additive or multiple additives. The polymeric composition can include at least, at most, exactly, or between (inclusive or exclusive) any two of 0.0 wt. %, 1 wt. %, 5 wt. %, 10 wt. %, 15 wt. %, 20 wt. %, 25 wt. %, 30 wt. %, 35 wt. %, 40 wt. %, 45 wt. %, 50 wt. %, 55 wt. %, 60 wt. %, or 65 wt. % of one or more other additives.

Non-limiting examples of additives that can be used the polymer composition of the present disclosure can include anti-fogging agents, peroxide, a plasticizer, an antioxidant, a heat stabilizer, a hindered amine light stabilizer, a nucleating agent, a flow modifier, an UV absorber, an impact modifier, a coupling agent, a release agent, a pigment, a colorant, a lubricant, a processing aid, a reinforcing filler, a flame retardant, a dispersant, a surfactant *etc.,* or any additive to achieve desired behavior during processing of the polymer or to obtain the final properties desired of the polymer, or combinations thereof. Plasticizers can include esters, organic phosphates, alkanes or paraffinic oils, naphthenic oils, aromatic oils, ethers, alcohols and polyalcohols, glycols, polyglycols, silicones, and/or oligomers compatible with the polymers. Reinforcing fillers can include short glass fibers, long glass fibers, quartz, mineral silicates, silica, carbon black, wood, fiberglass, fiberglass carbon, talc, calcium carbonate, silica, or a combination thereof.

Coupling agents can include maleic anhydride grafted polyethylene, maleic anhydride grafted polypropylene, or a combination that includes at least one of the foregoing. Non-limiting examples of commercially available coupling agents include Polybond® 3150 maleic anhydride grafted polypropylene from Chemtura (U.S.A.), Fusabond® P613 maleic anhydride grafted polypropylene, from DuPont (U.S.A.), and Priex® 20097 maleic anhydride grafter polypropylene homopolymer from Addcomp (Germany). The polymeric matrix can include, based on the total weight of the polymeric matrix, 0.1 wt. % to 20 wt. % coupling agent or greater than or substantially equal to any one of, or between any two of 0.1 wt. %, 1 wt. %, 2 wt. %, 3.0 wt. %, 4 wt. %, 5.0 wt. %, 6 wt. %, 7 wt. %, 8 wt. %, 9 wt. %, 10 wt. %, 11 wt. %, 12 wt. %, 13 wt. %, 14 wt. %, 15 wt. %, 16 wt. %, 17 wt. %, 18 wt. %, 19 wt. %, and 20 wt. % of coupling agent.

Non-limiting examples of antioxidants include sterically hindered phenolic compounds, aromatic amines, a phosphite compound, carbon black and the like. Non-limiting examples of phenolic antioxidants include 2,6-di-*tert*-butyl-4-methylphenol (CAS No. 128-37-0), pentaerythritol-tetrakis(3-(3,5-di-*tert*-butyl-4-hydroxyphenyl)propionate (CAS No. 6683-19-8), octadecyl 3-(3',5'-di-*tert*-butyl-4-hydroxyphenyl)propionate (CAS No. 2082-79-3), 1,3,5-trimethyl-2,4,6-tris-(3,5-di-*tert*-butyl-4-hydroxybenzyl)benzene (CAS No. 1709-70-2), 2,2'-thiodiethylenebis(3,5-di-*tert*-butyl-4-hydroxyphenyl)propionate (CAS No. 41484-35-9), calcium bis(ethyl 3,5-di-*tert*-butyl-4-hydroxybenzylphosphonate) (CAS No. 65140-91-2), 1,3,5-tris(3',5'-di-*tert*-butyl-4'-hydroxybenzyl)-isocyanurate (CAS No. 27676-62-6), 1,3,5-tris(4-*tert*-butyl-3-hydroxy-2,6-dimethylbenzyl)-1,3,5-triazine-2,4,6-(1H,3H,5H)-trione (CAS No. 40601-76-1), 3,3-bis(3-*tert*-butyl-4-hydroxyphenyl)ethylene butyrate (CAS No. 32509-66-3), 4,4'-thiobis(2-*tert*-butyl-5-methylphenol) (CAS No. 96-69-5), 2,2'-methylene-bis-(6-(1-methyl-cyclohexyl)-para-cresol) (CAS No. 77-62-3), 3,3'-bis(3,5-di-*tert*-butyl-4-hydroxyphenyl)-N,N'-hexamethylenedipropionamide (CAS No. 23128-74-7), 2,5,7,8-tetramethyl-2-(4',8',12'-trimethyltridecyl)-chroman-6-ol (CAS No. 10191-41-0), 2,2-ethylidenebis(4,6-di-*tert*-butylphenol) (CAS No. 35958-30-6), 1,1,3-tris(2-methyl-4-hydroxy-5'-*tert*-butylphenyl)butane (CAS No. 1843-03-4), 3,9-bis(1,1-dimethyl-2-(beta-(3-*tert*-butyl-4-hydroxy-5-methylphenyl)propionyloxy)ethyl)-2,4,8,10-tetraoxaspiro[5.5]undecane (CAS No. 90498-90-1;), 1,6-hexanediyl-bis(3,5-bis(1,1-dimethylethyl)-4-hydroxybenzene)propanoate) (CAS No. 35074-77-2), 2,6-di-*tert*-butyl-4-nonylphenol (CAS No. 4306-88-1), 4,4'-butylidenebis(6-*tert*-butyl-3-methylphenol (CAS No. 85-60-9); 2,2'-methylene bis(6-*tert*-butyl-4-methylphenol) (CAS No. 119-47-1), triethylenglycol-bis-(3-*tert*-butyl-4-hydroxy-5-methylphenyl)propionate (CAS No. 36443-68-2), a mixture of $C_{13}$ to $C_{15}$ linear and branched alkyl esters of 3-(3',5'-di-*tert*-butyl-4'-hydroxyphenyl)propionic acid (CAS No. 171090-93-0), 2,2' thiobis(6-*tert*-butyl-*para*-cresol) (CAS No. 90-66-4), diethyl-(3,5-di-tert-butyl-4-hydroxybenzyl)phosphate (CAS No. 976-56-7), 4,6-bis (octylthiomethyl)-*ortho*-cresol (CAS No. 110553-27-0), benzenepropanoic acid, octyl 3-(3,5-di-tert-butyl-4-hydroxyphenyl)propanoate (CAS No. 125643-61-0), 1,1,3-tris[2-methyl-4-[3-(3,5-di-tert-butyl-4-hydroxyphenyl)propionyloxy]-5-*tert*-butylphenyl]butane (CAS No. 180002-86-2), mixed styrenated phenols (CAS No. 61788-44-1), butylated, octylated phenols (CAS No. 68610-06-0), butylated reaction product of p-cresol and dicyclopentadiene (CAS No. 68610-51-5).

Non-limiting examples of antioxidants include a mixture of at least two of 1,3,5-trimethyl-2,4,6-tris-(3,5-di-tert-butyl-4-hydroxybenzyl) benzene sold under the trade name of Irganox® 1330 (BASF, Germany), tris[2,4-bis(2-methyl-2-propanyl)phenyl] phosphite sold under the trade name of Irgafos® 168 (BASF, Germany), pentaerythritol-tetrakis (3-(3,5-di-tert-butyl-4-hydroxyphenyl) propionate sold under the trade name Irganox® 1010 (BASF, Germany), 1,5,8,12-Tetrakis[4,6-bis(N-butyl-N-1,2,2,6,6-pentamethyl-4-piperidylamino)-1,3,5-triazin-2-yl]-1,5,8,12-tetraazadodecane sold under the trade name of Chimassorb 119 (BASF, Germany) is used.

Non-limiting examples of phosphite antioxidant include one of tris(2,4-di-*tert*-butylphenyl)phosphite (CAS No. 31570-04-4), tris(2,4-di-*tert*-butylphenyl)phosphate (CAS No. 95906-11-9), bis(2,4-di-*tert*-butylphenyl)pentaerythritol diphosphite (CAS No. 26741-53-7); and tetrakis (2,4-di-butylphenyl)-4,4'-biphenylene diphosphonite (CAS No. 119345-01-6), and bis (2,4-dicumylphenyl)pentaerythritol diphosphite (CAS No. 154862-43-8).

Non-limiting examples of UV stabilizers include hindered amine light stabilizers, hydroxybenzophenones, hydroxyphenyl benzotriazoles, cyanoacrylates, oxanilides, hydroxyphenyl triazines, and combinations thereof. Non-limiting examples of hindered amine light stabilizers include dimethyl succinate polymer with 4-hydroxy-2,2,6,6-tetramethyl-1-piperidine ethanol (CAS No. 65447-77-0); poly[[6-((l,l,3,3 tetramethylbutyl)amino)-1,3,5 -triazine2,4diyl] [(2,2,6,6-tetramethyl-4-piperidyl)imino]hexamethylene[2,2,6,6 tetramethyl-4-piperidyl)imino]] (CAS No. 70624-18-9); and 1,5,8,12-Tetrakis[4,6-bis(N-butyl-N-1,2,2,6,6-pentamethyl-4-piperidylamino)-1,3,5-triazin-2-yl]-1,5,8,12-tetraazadodecane (CAS No. 106990-43-6).

Non-limiting examples of heat stabilizers include phenothiazine, p-methoxyphenol, cresol, benzhydrol, 2-methoxy-p-hydroquinone, 2,5-di-tert-butylquinone, diisopropylamine, and distearyl thiodipropionate (CAS No. 693-36-7). In a preferred embodiment, distearyl thiodipropionate which is sold under the trade name Irganox® PS 820 (BASF, Germany) is used.

Other examples of other additives can include stabilizers, UV absorbers, impact modifiers, flame retardants, and cross-linking agents. A non-limiting example of a stabilizer can include Irganox® B225, commercially available from BASF. Non-limiting examples of UV absorbers include 4-substituted-2-hydroxybenzophenones and their derivatives, aryl salicylates, monoesters of diphenols, such as resorcinol monobenzoate, 2-(2-hydroxyaryl)-benzotriazoles and their derivatives, 2-(2-hydroxyaryl)-1,3,5-triazines and their derivatives, or combinations thereof. Non-limiting examples of impact modifiers include elastomers/soft blocks dissolved in matrix-forming monomer(s), such as, for example, bulk HIPS, bulk ABS, reactor modified PP, Lomod, Lexan EXL, and/or the like, thermoplastic elastomers dispersed in matrix material by compounding, such as, for example, di-, tri-, and multiblock copolymers, (functionalized) olefin (co)polymers, and/or the like, pre-defined core-shell (substrate-graft) particles distributed in matrix material by compounding, such as, for example, MBS, ABS-HRG, AA, ASA-XTW, SWIM, and/or the like, or combinations thereof. Non-limiting examples of flame retardants include ammonium polyphosphate, ethylene diamine phosphate, melamine polyphosphate, Piperazine pyrophosphate and combination thereof. Non-limiting examples of cross-linking agents include divinylbenzene, benzoyl peroxide, alkylenediol di(meth)acrylates, such as, for example, glycol bisacrylate and/or the like, alkylenetriol tri(meth)acrylates, polyester di(meth)acrylates, bisacrylamides, triallyl cyanurate, triallyl isocyanurate, allyl(meth)acrylate, diallyl maleate, diallyl fumarate, diallyl adipate, triallyl esters of citric acid, triallyl esters of phosphoric acid, or combinations thereof.

## B. Method of Preparing the Polymeric Composition

The antimicrobial composition can be made using known polymer producing methods. For example, a polymer matrix can be compounded (e.g., extruded, blended, kneaded, and the like) with the antimicrobial additive, and optionally, the antimicrobial promoter, of the present disclosure, and optionally, other additives, to produce the antimicrobial composition of the present disclosure. Compounding can be done, for example, in air or under an inert atmosphere (e.g., nitrogen). During compounding, the polymer material can soften or melt, and the antimicrobial additive and promoter and optional additives are dispersed in the polymer matrix. Temperature of compounding can range from 150 °C to 320 °C, or 175 °C to 275 °C, 200 °C to 250 °C, or at least, at most, exactly, or between any two of 150 °C, 160 °C, 170 °C, 180 °C, 190 °C, 200 °C, 210 °C, 220 °C, 230 °C, 240 °C, 250 °C, 260 °C, 270 °C, 280 °C, 290 °C, 300 °C, 310 °C, and 320 °C. The resulting polymer composition can be formed into an article. Non-limiting examples of forming include injection molding, extrusion, compression molding, rotational molding, blow molding, injection blow molding, film blowing, film casting, fiber spinning, 3-D printing, thermoforming, foaming, or casting.

## C. Article of Manufacture

The resulting formed article (e.g., an extrusion molded article, an injection molded article, a compression molded article, a rotational molded article, a blow molded article, an injection blow molded article, a 3-D printed article, a thermoformed article, a foamed article, or a cast film) can be a portion of an article of manufacture (e.g., a surface of an article of manufacture, a handle, an armrest, and the like) or is an article of manufacture. Non-limiting examples of articles of manufacture include an exterior and/or interior vehicle part, an exterior and/or interior train part, an exterior and/or interior airplane part, an exterior and/or interior building part, an electrical device part, an electronic device part, an industrial device part, packaging material, medical packing film and/or component, a medical tray, a blister pack, a medical component container, a food packing film, or a food container. In some aspects, the formed article forms a portion of or is a medical, industrial, or consumer article of manufacture comprising an antimicrobial composition disclosed herein. In some aspects, the medical, industrial, or consumer article of manufacture is exposed to a microbe, (e.g., a bacteria or virus), and the antimicrobial composition reduces, inhibits, or delays the replication or growth of the microbe.

## EXAMPLES

The present disclosure will be described in greater detail by way of specific examples. The following examples are offered for illustrative purposes only and are not intended to limit the disclosure in any manner. Those of skill in the art will readily recognize a variety of noncritical parameters which can be changed or modified to yield essentially the same results.

## Example 1

### (Preparation of antimicrobial compositions)

Multiple additives with potential antimicrobial efficacy were screened. Some experiments were performed using only polypropylene (PP) resin with no additives (reference or comparative examples).

The antimicrobial additives, and optionally, antimicrobial promoters, of the present disclosure were compounded with PP. PP powder resin was physically mixed with an additive package for each formulation to ensure homogeneity of the mixture. Extrusion was performed using the THERMO SCIENTIFIC™ Process 11 Parallel Twin-Screw Extruder (D 11 mm, LID 40). The operating conditions were maintained for all experiments. The extruder temperature profile was set from 75 - 220 °C. The extruder screw rotation speed was maintained at 223 rpm.

Antimicrobial additives tested are shown in Table 1, below.

**Table 1**

| Antimicrobial Additives | | |
| --- | --- | --- |
| Additive | Supplier *CAS Number* | Concentrations Tested (wt. %) |
| Tetrapod-shaped zinc oxide (t-ZnO) | Phi-Stone® AG *1314-13-2* | 0.1, 0.4, 1, 2 |
| PURISTA™ 100 (zinc oxide (ZnO)) | Arxada *1314-13-2* | 0.7 |
| Zinc maleate* | *7344-42-5* | 0.25, 0.5, 2 |
| Copper maleate* | *4751-07-9* | 0.25, 0.5, 2 |
| ZINC OMADINE® (zinc pyrithione (ZPT)) | Arxada *13463-41-7* | 0.1, 0.4, 2 |
| *Synthesized it according to M. Wang *et al.,* JOURNAL OF VINYL & ADDITIVE TECHNOLOGY, 20:1-9 (2014), incorporated by reference herein in its entirety. | | |

Antimicrobial promoters tested are show in Table 2, below.

**Table 2**

| Antimicrobial Promoters | | |
| --- | --- | --- |
| Promoter | Supplier *CAS Number* | Concentrations Tested (wt. %) |
| Erucamide (Eruc) | Aldrich *112-84-5* | 2 |
| Caprylic acid (CA) | Aldrich *124-07-2* | 0.04, 0.1, 0.4, 2 |
| Glycerol | Aldrich *56-81-5* | 2 |
| Polyethylenimine, branched (PEI-b) | Aldrich *9002-98-6* | 0.4 |
| JEFFAMINE® T-3000 (glyceryl poly(oxypropylene) triamine) (Jeff) | Huntsman Corporation 64852-22-8 | 0.4 |
| Citric acid | Aldrich *77-92-9* | 0.04, 0.1 |

**Example 2**

**(Formed article)**

The composite of Example 1 was used to make a 5 cm × 5 cm × 0.32 cm sample by injection molding. A mold was cast using a BABYPLAST® machine. Molding temperature was set at 230 °C.

**Example 3**

**(Antimicrobial testing)**

Antibacterial efficacy measurements were performed following ISO 22196. An aliquot ($225\ \mu L$) of a log phase cell suspension of either *Escherichia coli* ($4.2 \times 10^5$ cells mL$^{-1}$; ATCC 8739) or *Staphylococcus aureus* ($4.1 \times 10^5$ cells mL$^{-1}$; ATCC 6538p) prepared using the method described in ISO 22196 were inoculated onto the surface of 3 replicates of 30 mm × 30 mm specimens of the test materials of Example 1. The temperature of incubation was set to $35 \pm 2$ °C. The size of the surviving population of bacterial cells was determined using the method described in ISO 22196. The viable cells in the suspension were enumerated by spiral dilution on to Trypcase Soya Agar and by the pour plate method described in ISO 22196. These plates were then incubated at 35 °C + 2 °C for 24 hours, and then the colonies present were counted. An additional 3 replicates of unfortified surfaces (PP reference) were also inoculated in the manner described above but were analyzed immediately for the size of the bacterial population present to provide 0-time control data to permit PP samples without additives to be tested compared to the PP lab reference. Antimicrobial activities are given in logarithmic reduction R. R is calculated according to the bacterial concentration in the negative control and the concentration after 24 h of contact with the treated products. All data were converted to colony forming units (CFU) cm$^{-2}$ and then the log of the difference between the 2 counts was determined to give a measurement of antimicrobial activity according to Eq. (1):

Eq. (1): R= log [# of bacteria present on untreated sample after 24h (B)/# of bacteria present in treated samples after 24 h (C)]

$$R = \log(B) - \log(C)$$

$$R = Antibacterial\ activity\ (\geq 2)$$

The ISO 22196 does not define the value of bacterial reduction required after a certain amount of time to claim that a material is antimicrobial. However, it is accepted in the art that a material reaches a threshold of antimicrobial activity when the material provides a R $\geq$ log 2 (99% bacterial reduction) on both gram positive and gram negative bacteria after 24h exposure time. Results (Table 3) indicate that Zn maleate and Cu maleate have a strong biocidal activity down to a concentration of 0.25 wt% (Table 3, Entries 4 and 7). T-ZnO alone at 2 wt. % is less efficient, but is still above the R = log 2 (on both bacterial strains) required to claim a biocidal effect (Table 3, Entry 8). The activity drops at 0.4 wt. % loading (Table 3, Entry 9), especially on *E. coli.*

Table 3

| Antimicrobial Activity of Antimicrobial Additives | | | |
|---|---|---|---|
| Entry | Sample | *E. coli* | *S. aureus* |
| 1 | PP | 0 | 0 |
| 2 | PP-Zn maleate 2 wt. % | ≥5.4 | ≥4.3 |
| 3 | PP-Zn maleate 0.5 wt. % | 5.0 | ≥4.1 |
| 4 | PP-Zn maleate 0.25 wt. % | 4.7 | ≥4.1 |
| 5 | PP-Cu maleate 2 wt. % | ≥5.4 | ≥4.3 |
| 6 | PP-Cu maleate 0.5 wt. % | ≥5.2 | ≥4.1 |
| 7 | PP-Cu maleate 0.25 wt. % | 3.8 | ≥4.1 |
| 8 | PP t-ZnO 2 wt. % | 3.1 | 3.1 |
| 9 | PP-t-ZnO 0.4 wt. % | 1.7 | 2.6 |

The ability of antimicrobial promoters to inhibit bacterial growth alone was also tested (Table 4). Erucamide and glycerol alone did not inhibit bacterial growth, even at 2 wt. %. Caprylic acid (CA) inhibited bacterial growth at 2 wt. % (Table 4, Entries 2, 3 and 6, respectively). This sample has been retested and showed consistent results, indicating that the effect was repeatable (data not shown). After lowering the concentration of caprylic acid to 0.4 wt. %, activity towards *S. aureus* is maintained but decreases for *E. coli* (Table 4, Entry 7). Lowering the caprylic acid concentration to 0.1 wt. % reduced activity on *S. aureus* (Table 4, Entry 8). At 0.4 wt. %, polyethylenimine branched (PEI-b) inhibited bacterial growth (Table 4, Entry 4). Without wishing to be bound by theory, quaternary ammoniums are known to have antibacterial properties, which may explain why PEI-b exhibited antibacterial activity. JEFFAMINE® T-3000, which has only primary amine groups, did not display antibacterial activity (Table 4, Entry 5). Citric acid at 0.1 and 0.04 wt. % also do not show antibacterial activity (Table 4, Entries 10 and 11).

**Table 4**

| Antimicrobial Activity of Antimicrobial Promoters | | | |
|---|---|---|---|
| Entry | Sample | *E. coli* | *S. aureus* |
| 1 | PP | 0 | 0 |
| 2 | PP - Erucamide 2% | 0 | 0 |
| 3 | PP - Glycerol 2% | 0 | 0 |
| 4 | PP - PEI-b 0.4% | 2.2 | ≥4.3 |
| 5 | PP - JEFFAMINE® T-3000 0.4% | 0 | 0 |
| 6 | PP - Caprylic acid 2% | ≥5.5 | ≥4.3 |
| 7 | PP - Caprylic acid 0.4% | 2.5 | ≥4.1 |
| 8 | PP - Caprylic acid 0.1% | 1.0 | 0.9 |
| 9 | PP - Caprylic acid 0.04% | 1.0 | 0.1 |
| 10 | PP - Citric acid 0.1% | 1.0 | 0.2 |
| 11 | PP - Citric acid 0.04% | 0.9 | 0 |

Synergy of the antimicrobial additive zinc pyrithione (ZPT) with the antimicrobial promoters in shown in Table 5. ZPT alone at 2 wt. % yielded some antibacterial activity but was slightly low on *E. coli* (Table 5, Entry 1). At this loading level, the combination ZPT with any of the promoters showed a boost in activity (Table 5, Entries 2 to 4). Erucamide was least synergistic, while caprylic acid (CA) was most synergistic. This performance allowed a reduction in the concentration of each antimicrobial additive. Again, CA proved to be the best antimicrobial promoter, allowing reduced concentrations down to 0.1 wt. % of both the antimicrobial additive and the antimicrobial promoter (Table 5, Entries 12 to 14). At this loading level, CA alone is not active (Table 4, Entry 8).

**Table 5**

| Antimicrobial Activity of Antimicrobial Additive (ZPT) & Antimicrobial Promoters | | | |
|---|---|---|---|
| Entry | Sample | *E. Coli* | *S. Aureus* |
| 1 | PP- ZPT 2 wt. % | 2.6 | ≥4.3 |
| 2 | PP - ZPT 2 wt. % - Erucamide 2 wt. % | 3.1 | ≥4.3 |
| 3 | PP - ZPT 2 wt. % - CA 2 wt. % | ≥5.4 | ≥4.3 |
| 4 | PP - ZPT 2 wt. % - Gly 2 wt. % | 3.0 | ≥4.3 |
| 5 | PP - ZPT 0.4 wt. % - PEI-b 0.4 wt. % | ≥5.5 | ≥4.3 |
| 6 | PP - ZPT 0.4 wt. % - Jeff 0.4 wt. % | 3.9 | ≥4.3 |
| 7 | PP - ZPT 0.4 wt. % - CA 0.4 wt. % | ≥5.5 | ≥4.1 |
| 8 | PP - ZPT 0.4 wt. % - CA 0.1 wt. % | ≥6.0 | ≥4.1 |
| 9 | PP - ZPT 0.4 wt. % - CA 0.04 wt. % | 4.5 | ≥4.1 |
| 10 | PP - ZPT 0.4 wt. % - CitAc 0.1 wt. % | 5.8 | ≥4.1 |
| 11 | PP - ZPT 0.4 wt. % - CitAc 0.04 wt. % | 5.4 | ≥4.1 |
| 12 | PP - ZPT 0.1 wt. % - PEI-b 0.1 wt. % | 5.0 | ≥4.3 |
| 13 | PP - ZPT 0.1 wt. % - Jeff 0.1 wt. % | 2.9 | ≥4.3 |
| 14 | PP - ZPT 0.1 wt. % - CA 0.1 wt. % | 3.7 | ≥4.3 |

Synergy of the antimicrobial additive zinc oxide (ZnO) and tetrapod-shaped ZnO (t-ZnO) with the antimicrobial promoters in shown in Table 6. t-ZnO alone at 2 wt. % showed decent antibacterial results. Synergy with the promoters was observed, and all antimicrobial activity results were improved to reach ≥~log 4 on S. *aureus* and *E. coli* (Table 6, Entries 2 to 4). When lowering the t-ZnO concentration to 0.4 wt. %, antimicrobial activity was lost (Table 6, Entry 5). When used in combination with CA at 0.4 wt. % loading, however, a full antibacterial effect was obtained (Table 6, Entry 6). Again, this effect is not due to CA alone, as at this concentration, only moderate activity on *E. coli* was observed. When further lowering the concentration of the additive and promoter to 0.1 wt. % level, antimicrobial activity completely lost (Table 6, Entry 7). At 0.7 wt. %, ZnO had a moderate antibacterial performance with efficient activity against *S. aureus* (Table 6, Entry 8). Activity was fully increased by the presence of CA at 0.1 wt. % (Table 6, Entry 9). Again, CA alone at this level does not have any antibacterial effect, showing synergy between the additive and the promoter.

**Table 6**

| Antimicrobial Activity of Antimicrobial Additive (ZnO) & Antimicrobial Promoters | | | |
| --- | --- | --- | --- |
| Entry | Sample | *E. coli* | *S. aureus* |
| 1 | PP - t-ZnO 2 wt. % | 3.1 | 3.1 |
| 2 | PP - t-ZnO 2 wt. % - Eruc 2 wt. % | 4.9 | ≥4.3 |
| 3 | PP - t-ZnO 2 wt. % - CA 2 wt. % | ≥5.4 | ≥4.3 |
| 4 | PP - t-ZnO 2 wt. % - Gly 2 wt. % | ≥5.4 | ≥4.3 |
| 5 | PP - t-ZnO 0.4 wt. % | 1.7 | 2.6 |
| 6 | PP - t-ZnO 0.4 wt. % - CA 0.4 wt. % | ≥5.5 | ≥4.3 |
| 7 | PP - t-ZnO 0.1 wt. % - CA 0.1 wt. % | 0.7 | 0.7 |
| 8 | PP - ZnO 0.7 wt. % | 2.4 | ≥4.3 |
| 9 | PP - ZnO 0.7 wt. % - CA 0.1 wt. % | ≥5.8 | ≥4.1 |

**Example 4**

**(Antiviral testing)**

Antiviral efficacy measurements were performed following ISO 21702. An aliquot (0.4 mL) of H1N1 influenza virus prepared using the method described in ISO 21702 was inoculated onto the surface of flat (50 ± 2) mm × (50 ± 2) mm x ≤ 10 mm specimens of the test materials of Example 1. The inoculated test specimens (including the untreated test specimens) were incubated at 25 ± 1 °C in a hydrated sealed environment to provide a relative humidity of not less than 90 % for the duration of the test. Immediately after inoculation, three untreated test specimens (a paraffin wax film) were processed by adding neutralizer. The number of the infectivity titer of virus recovered from the untreated test specimens was used to determine the recovery rate of the virus. After contact, the three untreated test specimens and three treated test specimens were processed according to the same procedure, and the infectivity titer of virus recovered from the test specimen was measured. Results are reported in % reduction of virus compared to the untreated specimen (a paraffin wax film which shows a very slow virus decay over time) used as a reference. The ISO 21702 does not define which value of virus reduction is required to claim that a material is antiviral. Since viruses decay relatively fast over time even on untreated plastic surfaces, a measurable increase of virus decay compared to the PP material without additive was sought for after only 6h exposure time.

Synergy between antimicrobial promoters and antimicrobial additives on H1N1 after 6h incubation) are shown in Table 7. PP alone showed a 32% virus decay compared to the paraffin wax film (Table 7, Entry 1). PP with CA at 2 wt. % significantly increased antiviral activity (Table 7, Entry 2). For ZPT, some synergy was observed. Separately, CA and ZPT reduced viral load by 85%, while together, the reduction in viral load increased to 93% (Table 7, Entry 4). Activity dropped at lower loading levels (Table 7, Entry 5) but remained higher than PP without additive.

**Table 7**

| Antimicrobial Activity of Antimicrobial Additive (ZPT) & Antimicrobial Promoters | | |
| --- | --- | --- |
| Entry | Sample | % reduction |
| 1 | PP | 32 |
| 2 | PP - CA 2 wt. % | 85 |

(continued)

| Antimicrobial Activity of Antimicrobial Additive (ZPT) & Antimicrobial Promoters | | |
|---|---|---|
| Entry | Sample | % reduction |
| 3 | PP - ZPT 2 wt. % | 85 |
| 4 | PP - ZPT 2 wt. % - CA 2 wt. % | 93 |
| 5 | PP - ZPT 0.4 wt. % - CA 0.4 wt. % | 54 |

**Example 5**

**(CT Scanning)**

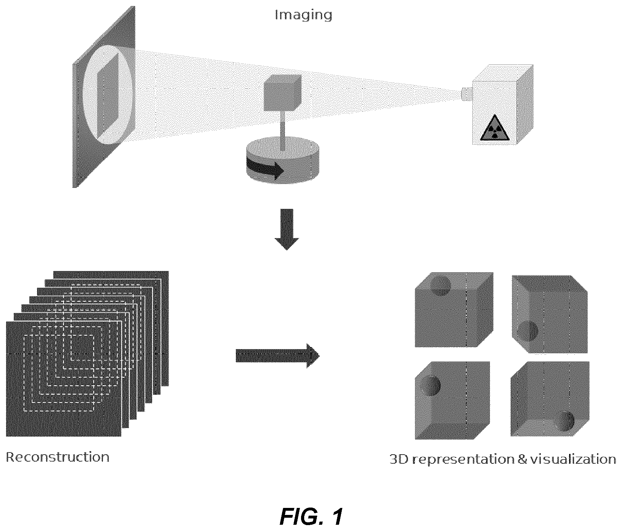

A polymeric composition including polypropylene, 2 wt% tetrapod-shaped ZnO, and 2 wt% erucamide was cut to size (e.g., 8 mm × 1 mm × 1 mm) and imaged using computerized tomography (CT) scanning **(FIG. 1).** CT scanning was performed according to the following parameters:

**Table 8**

| CT Scanning Parameters | |
|---|---|
| **X-ray** | 50 kV |
| **Resolution** | 0.2 μM |
| **Exposure Time** | 3030 ms |
| **Averaging** | 3 frames |
| **Rotation** | 360° / 0.06° |
| **Scanning Time** | 21h20m |
| **Reconstruction** | No beam hardening No ring artifact correction |

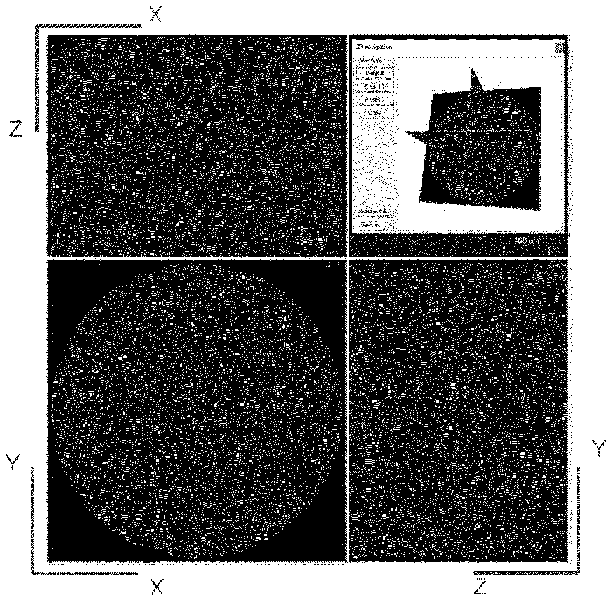

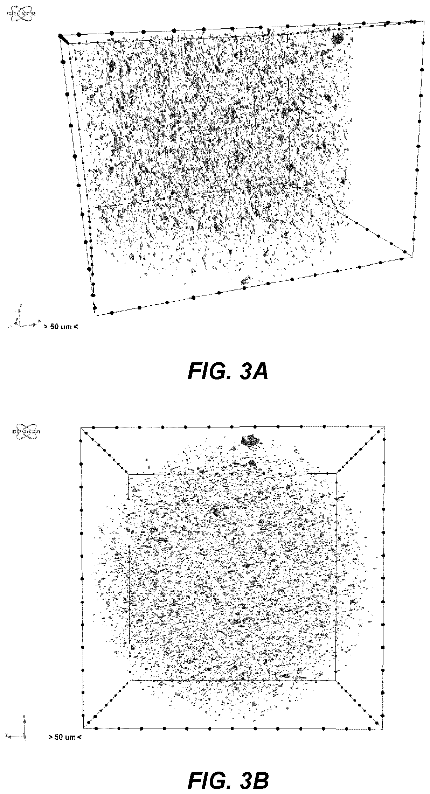

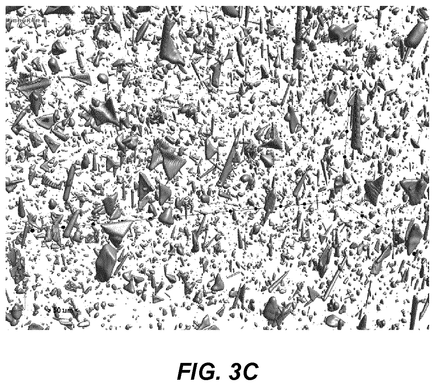

**FIG. 2** shows reconstructed images of three cross-sections of the polymeric composition. Weak "metal" artifacts can be observed around the tetrapod-shaped ZnO particles, which may be due to the high difference in attenuation between the particles and the matrix. **FIGs. 3A-3C** are three-dimensional representations of the polymeric composition showing different shapes of the tetrapod-shaped ZnO particles **(FIG. 3A).** As shown in **FIG. 3B,** the tetrapod-shaped ZnO particles present a strong orientation nearly within the (YZ) plane. **FIG. 3C** provides a magnification of the 3D representation of the tetrapod-shaped ZnO particles showing the shapes of the different fragments. Together, these data demonstrate that antimicrobial additives can be uniformly dispersed throughout a polyolefin resin.

**Prophetic Example A**

**(Preparation of other polyolefin polymer compositions of the present disclosure)**

The antimicrobial additives, and optionally, the antimicrobial promoters, of the present disclosure (Example 1) will be compounded with the polyolefin polymers, for example, polyethylene, low density polyethylene (LDPE), high density polyethylene (HDPE), or blends thereof. The antimicrobial additives, and optionally, the antimicrobial promoters, will be mixed with plastic powder or pellets using a powder mixer, then extruded to form a composite material. This composite material will then be molded into the desired shape using a compression or injection molding process.

**Prophetic Example B**

**(Preparation of a terephthalate polymer compositions)**

The antimicrobial additives, and optionally, the antimicrobial promoters, of the present disclosure (Example 1) will be compounded with PET or BET. A lab-scale twin-screw compounder (Xplore - MC15) will be used to mix the antimicrobial additives, and optionally, the antimicrobial promoters, of the present disclosure (Example 1) into the PET or BET using the conditions of Prophetic Example A.

**Prophetic Example C**

**(Preparation of a polycarbonate polymer compositions)**

The antimicrobial additives, and optionally, the antimicrobial promoters, of the present disclosure (Example 1) will be compounded with a polycarbonate polymer, a blend of polycarbonate and polybutylene terephthalate (PBT), a blend of polycarbonate-acrylonitrile butadiene styrene (ABS), or a blend of polycarbonate-polyethylene terephthalate (PET) (collectively polycarbonate polymer) using the conditions of Prophetic Example A.

**Prophetic Example D**

**(Preparation of a polyetherimide polymer compositions)**

The antimicrobial additives, and optionally, the antimicrobial promoters, of the present disclosure (Example 1) will be compounded with a polyetherimide polymer using the conditions of Prophetic Example A.

**Prophetic Example E**

**(Preparation of a styrene-acrylonitrile resin polymer compositions)**

The antimicrobial additives, and optionally, the antimicrobial promoters, of the present disclosure (Example 1) will be compounded with a styrene-acrylonitrile resin polymer using the conditions of Prophetic Example A.

**Prophetic Example F**

**(Preparation of a polyvinyl chloride polymer compositions)**

The antimicrobial additives, and optionally, the antimicrobial promoters, of the present disclosure (Example 1) will be compounded with a polyvinyl chloride polymer using the conditions of Prophetic Example A.

**Prophetic Example G**

**(Preparation of an epoxy polymer compositions)**

The antimicrobial additives, and optionally, the antimicrobial promoters, of the present disclosure (Example 1) will be compounded with an epoxy polymer using the conditions of Prophetic Example A.

**Prophetic Example H**

**(Preparation of a polyether polymer compositions)**

The antimicrobial additives, and optionally, the antimicrobial promoters, of the present disclosure (Example 1) will be compounded with a polyether ether ketone polymer, a polyether ketone ketone polymer, a blend thereof using the conditions of Prophetic Example A.

**Prophetic Example I**

**(Preparation of a poly(phenylene oxide) polymer composition)**

The antimicrobial additives, and optionally, the antimicrobial promoters, of the present disclosure (Example 1) will be compounded with a polyphenylene oxide poly(phenylene oxide) polymer or a blend of PPO and polypropylene using the conditions of Prophetic Example A.

**Prophetic Example J**

**(Preparation of a thermoplastic polymer compositions)**

The antimicrobial additives, and optionally, the antimicrobial promoters, of the present disclosure (Example 1) will be compounded with a thermoplastic elastomer, an engineered thermoplastic composition, or a blend thereof using the conditions of Prophetic Example A.

**Prophetic Example K**

**(Preparation of a poly(methyl methacrylate) polymer composition)**

The antimicrobial additives, and optionally, the antimicrobial promoters, of the present disclosure (Example 1) will be compounded with a poly(methyl methacrylate) polymer using the conditions of Prophetic Example A.

**Prophetic Example L**

**(Preparation of an acrylonitrile butyldiene styrene polymer composition)**

The antimicrobial additives, and optionally, the antimicrobial promoters, of the present disclosure (Example 1) will be compounded with an acrylonitrile butyldiene styrene polymer using the conditions of Prophetic Example A.

**Prophetic Example M**

**(Preparation of a polystyrene polymer composition)**

The antimicrobial additives, and optionally, the antimicrobial promoters, of the present disclosure (Example 1) will be compounded with a polystyrene polymer or a blend of blend of polyphenylene oxide and polystyrene using the conditions of Prophetic Example A.

**Prophetic Example N**

**(Preparation of a polyamide polymer composition)**

The antimicrobial additives, and optionally, the antimicrobial promoters, of the present disclosure (Example 1) will be compounded with a polyamide polymer using the conditions of Prophetic Example A.

**Prophetic Example O**

**(Testing of a Prophetic Examples A-N of the present disclosure)**

The prophetic polymer compositions of Examples A-N will be formed into an article using the methods disclosed herein. The articles will be assessed using the test methods of Examples 3 and 4 and Prophetic Example A. It is expected that the test results for prophetic samples A-N will be similar or better than the test results for the polymer composition of Example 1 and a reference sample lacking antimicrobial additives, and optionally, the antimicrobial promoters, of the present disclosure (Example 1).

In conclusion, an antimicrobial composition using the inventive antimicrobial additives, and optionally, the antimicrobial promoters, was made. The polymer composition of the present disclosure containing the antimicrobial additives, and optionally, the antimicrobial additives, showed resistance to bacterial and viral growth and lower concentrations of the antimicrobial additives and antimicrobial additives. While only polypropylene has been evaluated, it is expected that other polymer compositions listed in the specification and examples will exhibit the same stability, durability, and efficacy and the exemplified inventive polymer composition. Additionally, while only *S. aureus, E. coli,* and H1N1 were evaluated, it is expected that other bacteria and viruses will be similarly affected by the exemplified inventive polymer composition.

Although embodiments of the present application and their advantages have been described in detail, it should be understood that various changes, substitutions, and alterations can be made herein without departing from the spirit and scope of the embodiments as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the above disclosure, processes, machines, manufacture, compositions of matter, means, methods, or steps, presently existing or later to be developed that perform substantially the same function or achieve substantially the same result as the corresponding embodiments described herein can be utilized. Accordingly, the appended claims are intended to include within their scope such processes, machines, manufacture, compositions of matter, means, methods, or steps.

**Claims**

1.  An antimicrobial composition comprising:

    a polyolefin resin; and
    0.01 wt. % to 3 wt. % of a zinc compound or a copper compound, based on the total weight of the composition, or a combination thereof uniformly dispersed throughout the polyolefin resin,
    wherein the composition has antibacterial and/or antiviral activity.

2.  The composition of claim 1, further comprising an antimicrobial promoter, preferably in an amount of 0.01 wt. % to 3 wt. %, based on the total weight of the composition.

3.  The composition of claim 2, wherein the antimicrobial promoter comprises an aliphatic acid or an aliphatic polyamine, or a combination thereof,

    preferably, wherein the aliphatic acid comprises atoms selected from the group consisting of carbon, hydrogen, oxygen, and combinations thereof, and/or wherein the aliphatic polyamine comprises atoms selected from the group consisting of carbon, hydrogen, oxygen, nitrogen, and combinations thereof,
    preferably, wherein the aliphatic acid comprises citric acid, caprylic acid, or a combination thereof, and/or
    preferably, wherein the aliphatic polyamine comprises a polyethylenimine, a polyetheramine, or a combination thereof.

4.  The composition of any one of claims 1-3, wherein:

    the zinc compound comprises zinc pyrithione, zinc oxide, tetrapod-shaped zinc oxide, zinc hydroxide, zinc pyrrolidone, zinc dipyroglutamate, or a complex comprising zinc and a diacid or an anhydride thereof; and/or
    the copper compound comprises a complex comprising copper and a diacid or an anhydride thereof,
    preferably, wherein the diacid comprises maleic acid, malic acid, succinic acid, itaconic acid, phthalic acid, citric acid, tartaric acid, or aspartic acid, and/or
    preferably, wherein the diacid of the zinc complex comprises maleic acid and/or the diacid of the copper complex comprises maleic acid.

5.  The composition of any one of claims 1-4, wherein the polyolefin resin comprises polyethylene (PE), polypropylene (PP), ethylene vinyl acetate (EVA), polyvinyl butyraldehyde (PVB), polybutylene (PB), polyisobutylene (PIB), ethylene propylene diene monomer (EPDM), poly(styrene-butadiene-styrene) (SBS), polystyrene, acrylonitrile butadiene styrene (ABS), acrylonitrile styrene acrylate (ASA), or styrene acrylonitrile (SAN), or a combination thereof, preferably, wherein the polyolefin resin comprises polypropylene.

6.  The composition of any one of claims 1-5, comprising:

    polypropylene; and
    tetrapod-shaped zinc oxide, zinc maleate, or copper maleate, or a combination thereof,

        preferably, wherein the tetrapod-shaped zinc oxide is in an amount of 0.01 wt. % to 3 wt. %, based on the total weight of the composition, more preferably, the tetrapod-shaped zinc oxide is in an amount of 0.4 wt. % to 2 wt. %, based on the total weight of the composition,
        preferably, wherein the zinc maleate is in an amount of 0.01 wt. % to 3 wt. %, based on the total weight of the composition, more preferably, wherein the zinc maleate is in an amount of 0.25 wt. % to 2 wt. % based on the total weight of the composition,
        and/or

preferably, wherein the copper maleate is in an amount of 0.01 wt. % to 3 wt. %, based on the total weight of the composition, more preferably, wherein the copper maleate is an amount of 0.25 wt. % to 2 wt. %, based on the total weight of the composition.

7. The composition of any one of claims 1-6, comprising:

polypropylene and 0.01 wt. % to 3 wt. % tetrapod-shaped zinc oxide, based on the total weight of the composition, preferably 0.4 wt. % to 2 wt. % tetrapod-shaped zinc oxide, based on the total weight of the composition;
polypropylene and 0.01 wt. % to 3 wt. % zinc maleate, based on the total weight of the composition, preferably 0.25 wt. % to 2 wt. % zinc maleate, based on the total weight of the composition;
or
polypropylene and 0.01 wt. % to 3 wt. % copper maleate, based on the total weight of the composition, preferably 0.25 wt. % to 2 wt. % copper maleate, based on the total weight of the composition.

8. The composition of any one of claims 2-7, comprising:

polypropylene; and
citric acid, caprylic acid, a polyethylenimine, a polyetheramine, or a combination thereof,

preferably, wherein the citric acid and caprylic acid are in an amount of 0.01 wt. % to 3 wt. %, based on the total weight of the composition, more preferably, wherein the citric acid and caprylic acid are in an amount of 0.04 wt. % to 2 wt. %, based on the total weight of the composition, and/or
preferably, wherein the polyethylenimine and the polyetheramine are in an amount of 0.01 wt. % to 3 wt. %, based on the total weight of the composition, more preferably, wherein the polyethylenimine and the polyetheramine are in an amount of 0.1 wt. % to 0.4 wt. %, based on the total weight of the composition.

9. The composition of any one of claims 2-8, comprising:

polypropylene; and
citric acid, caprylic acid, a polyethylenimine, or a polyetheramine, or a combination thereof; and
zinc pyrithione, zinc oxide, or tetrapod-shaped zinc oxide, or a combination thereof,

preferably, wherein the citric acid and caprylic acid are in an amount of 0.01 wt. % to 3 wt. %, based on the total weight of the composition, more preferably, wherein the citric acid and caprylic acid are in an amount of 0.04 wt. % to 2 wt. %, based on the total weight of the composition,
preferably wherein the polyethylenimine and the polyetheramine are in an amount of 0.01 wt. % to 3 wt. %, based on the total weight of the composition, more preferably, wherein the polyethylenimine and the polyetheramine are in an amount of 0.1 wt. % to 0.4 wt. %, based on the total weight of the composition, and/or
preferably, wherein the zinc pyrithione, zinc oxide, and tetrapod-shaped zinc oxide are in an amount of 0.01 wt. % to 3 wt. %, based on the total weight of the composition, more preferably, wherein the zinc pyrithione, zinc oxide, and tetrapod-shaped zinc oxide are in an amount of 0.1 wt. % to 2 wt. %, based on the total weight of the composition.

10. The composition of any one of claims 2-9, comprising:

polypropylene and 0.01 wt. % to 3 wt. % citric acid or caprylic acid, based on the total weight of the composition, preferably 0.04 wt. % to 2 wt. % citric acid or caprylic acid, based on the total weight of the composition;
polypropylene, 0.01 wt. % to 3 wt. % citric acid or caprylic acid, based on the total weight of the composition, preferably 0.04 wt. % to 2 wt. % citric acid or caprylic acid, based on the total weight of the composition, and 0.01 wt. % to 3 wt. % zinc pyrithione, zinc oxide, or tetrapod-shaped zinc oxide, based on the total weight of the composition, preferably 0.1 wt. % to 2 wt. % zinc pyrithione, zinc oxide, or tetrapod-shaped zinc oxide, based on the total weight of the composition;
polypropylene and 0.01 wt. % to 3 wt. % of a polyethylenimine or a polyetheramine, based on the total weight of the composition, preferably, 0.1 wt. % to 0.4 wt. % of a polyethylenimine or a polyetheramine, based on the total weight of the composition; or
polypropylene, 0.01 wt. % to 3 wt. % of a polyethylenimine or a polyetheramine, based on the total weight of the composition, preferably, 0.1 wt. % to 0.4 wt. % of a polyethylenimine or a polyetheramine, based on the total weight of the composition, and 0.01 wt. % to 3 wt. % zinc pyrithione, zinc oxide, or tetrapod-shaped zinc oxide, based on the total weight of the composition, preferably, 0.1 wt. % to 2 wt. % zinc pyrithione, zinc oxide, or tetrapod-shaped zinc oxide, based on the total weight of the composition.

11. The composition of any one of claims 1-10, wherein the composition does not comprise zinc pyrithione.

12. A medical, industrial, or consumer product comprising the composition of any one of claims 1-11.

13. The medical, industrial, or consumer product of claim 12, wherein the medical, industrial, or consumer product is exposed to a microbe, preferably, a bacteria or virus, and wherein the composition of any one of claims 1-11 reduces replication of the microbe.

14. A method of manufacturing a medical, industrial, or consumer product comprising the composition of any one of claims 1-11, the method comprising thermoforming, extruding, injection molding, blow molding, film blowing, film casting, or fiber spinning the composition of any one of claims 1-11 to produce the medical, industrial, or consumer product.

15. A method of reducing microbial growth on a surface of a medical, industrial, or consumer product comprising the composition of any one of claims 1-11, the method comprising exposing the surface of the product to a microbe, wherein microbial growth on the surface of the product is reduced or inhibited.

Imaging

Reconstruction

3D representation & visualization

## FIG. 1

**FIG. 3A**

**FIG. 3B**

FIG. 3C

Europäisches
Patentamt

European
Patent Office

Office européen
des brevets

**EUROPEAN SEARCH REPORT**

Application Number

EP 23 20 1175

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 795 141 B2 (DMR INT INC [US]) 24 October 2017 (2017-10-24) | 1-3,5, 10-15 | INV. A01N1/00 |
| Y | * claims; examples 6-7 * | 1-15 | A01N25/10 C08K3/105 |
| X | EP 4 112 675 A1 (PANAMEDICA MACIEJ MICHALIK [PL]) 4 January 2023 (2023-01-04) | 1-3,5,8, 10-15 | |
| Y | * example 1 * | 1-15 | |
| X | CN 111 925 593 A (RIFENG ENTPR GROUP CO LTD; FOSHAN RIFENG ENTPR CO LTD ET AL.) 13 November 2020 (2020-11-13) | 1-7, 11-15 | |
| Y | * examples * | 1-15 | |
| Y | WO 2021/224509 A2 (SYMRISE AG [DE]) 11 November 2021 (2021-11-11) * page 27, paragraph 2 * | 1-15 | |

TECHNICAL FIELDS
SEARCHED (IPC)

C08K
A01N

The present search report has been drawn up for all claims

| Place of search | Date of completion of the search | Examiner |
|---|---|---|
| Munich | 19 February 2024 | Bertrand, Franck |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 1175

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2024

| Patent document cited in search report | | Publication date | Patent family member(s) | | Publication date |
|---|---|---|---|---|---|
| US 9795141 | B2 | 24-10-2017 | US | 2014199356 A1 | 17-07-2014 |
| | | | US | 2014199358 A1 | 17-07-2014 |
| | | | US | 2014199359 A1 | 17-07-2014 |
| | | | US | 2017265475 A1 | 21-09-2017 |
| | | | US | 2018000088 A1 | 04-01-2018 |
| | | | WO | 2014108766 A1 | 17-07-2014 |
| | | | WO | 2014108838 A1 | 17-07-2014 |
| | | | WO | 2014108840 A1 | 17-07-2014 |
| EP 4112675 | A1 | 04-01-2023 | NONE | | |
| CN 111925593 | A | 13-11-2020 | NONE | | |
| WO 2021224509 | A2 | 11-11-2021 | NONE | | |

EPO FORM P0459

For more details about this annex : see Official Journal of the European Patent Office, No. 12/82

# EP 4 458 151 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- *CHEMICAL ABSTRACTS*, 128-37-0
- *CHEMICAL ABSTRACTS*, 6683-19-8
- *CHEMICAL ABSTRACTS*, 2082-79-3
- *CHEMICAL ABSTRACTS*, 1709-70-2
- *CHEMICAL ABSTRACTS*, 41484-35-9
- *CHEMICAL ABSTRACTS*, 65140-91-2
- *CHEMICAL ABSTRACTS*, 27676-62-6
- *CHEMICAL ABSTRACTS*, 40601-76-1
- *CHEMICAL ABSTRACTS*, 32509-66-3
- *CHEMICAL ABSTRACTS*, 96-69-5
- *CHEMICAL ABSTRACTS*, 77-62-3
- *CHEMICAL ABSTRACTS*, 23128-74-7
- *CHEMICAL ABSTRACTS*, 10191-41-0
- *CHEMICAL ABSTRACTS*, 35958-30-6
- *CHEMICAL ABSTRACTS*, 1843-03-4
- *CHEMICAL ABSTRACTS*, 90498-90-1
- *CHEMICAL ABSTRACTS*, 35074-77-2
- *CHEMICAL ABSTRACTS*, 4306-88-1
- *CHEMICAL ABSTRACTS*, 85-60-9
- *CHEMICAL ABSTRACTS*, 119-47-1
- *CHEMICAL ABSTRACTS*, 36443-68-2
- *CHEMICAL ABSTRACTS*, 171090-93-0
- *CHEMICAL ABSTRACTS*, 90-66-4
- *CHEMICAL ABSTRACTS*, 976-56-7
- *CHEMICAL ABSTRACTS*, 110553-27-0
- *CHEMICAL ABSTRACTS*, 125643-61-0
- *CHEMICAL ABSTRACTS*, 180002-86-2
- *CHEMICAL ABSTRACTS*, 61788-44-1
- *CHEMICAL ABSTRACTS*, 68610-06-0
- *CHEMICAL ABSTRACTS*, 68610-51-5
- *CHEMICAL ABSTRACTS*, 31570-04-4
- *CHEMICAL ABSTRACTS*, 95906-11-9
- *CHEMICAL ABSTRACTS*, 26741-53-7
- *CHEMICAL ABSTRACTS*, 119345-01-6
- *CHEMICAL ABSTRACTS*, 154862-43-8
- *CHEMICAL ABSTRACTS*, 65447-77-0
- *CHEMICAL ABSTRACTS*, 70624-18-9
- *CHEMICAL ABSTRACTS*, 106990-43-6
- *CHEMICAL ABSTRACTS*, 693-36-7